# EUROPÄISCHE PATENTSCHRIFT

(11) **EP 4 241 071 B1**
(45) Veröffentlichungstag und Bekanntmachung des Hinweises auf die Patenterteilung: **24.09.2025**
(21) Anmeldenummer: 21801132.8
(22) Anmeldetag: 29.10.2021
(51) Int. Cl.: G01N 21/85, G01N 21/31

(54) **SENSORANORDNUNG ZUR SPEKTROSKOPISCHEN ERFASSUNG VON SUBSTANZEN**
SENSOR ASSEMBLY FOR SPECTROSCOPICALLY DETECTING SUBSTANCES
ENSEMBLE CAPTEUR DESTINÉ À LA DÉTECTION SPECTROSCOPIQUE DE SUBSTANCES

(30) Priorität: 03.11.2020 DE 102020128973
(43) Veröffentlichungstag der Anmeldung: 13.09.2023
(73) Patentinhaber: Hamilton Bonaduz AG, 7402 Bonaduz (CH)
(72) Erfinder: WILLI, Spela, 7402 Bonaduz (CH); OFFENBECK, Bernd, 93057 Regensburg (DE); LECKEBUSCH, Klaus, 7425 Masein (CH); GIARDINA, Marco, 2000 Neuchâtel (CH); SCHÖNFUSS, Dirk, 7403 Rähzüns (CH)
(74) Vertreter: Ruttensperger Lachnit Trossin Gomoll
(86) Internationale Anmeldenummer: PCT/EP2021/080145
(87) Internationale Veröffentlichungsnummer: WO 2022/096397

(56) Entgegenhaltungen:
- WO-A1-2007/091949
- DE-U1- 202004 013 614
- FR-A1- 3 059 770
- US-A1- 2002 072 657

## Beschreibung

Die vorliegende Erfindung betrifft eine spektroskopische Sensoranordnung zur Erfassung wenigstens eines vorbestimmten Analyten-Bestandteils eines Messfluids, wobei die Sensoranordnung umfasst:
- ein Sensorgehäuse mit einem Geräteabschnitt und einem Probenabschnitt,
- eine im Geräteabschnitt angeordnete Strahlungsquelle, welche ausgebildet ist, eine mit dem wenigstens einen vorbestimmten Analyten-Bestandteil wechselwirkende elektromagnetische Messstrahlung in Richtung zum Probenabschnitt auszusenden,
- eine im Geräteabschnitt angeordnete Detektorvorrichtung, welche dazu ausgebildet ist, in Richtung vom Probenabschnitt einstrahlende elektromagnetische Strahlung zu erfassen,
- eine für die Messstrahlung durchlässige und für den wenigstens einen vorbestimmten Analyten-Bestandteil undurchlässige Barriereanordnung, wobei die Barriereanordnung zwischen dem Geräteabschnitt und dem Probenabschnitt angeordnet ist,
- eine im Probenabschnitt angeordnete Polymermatrix, welche dazu ausgebildet ist, den wenigstens einen Analyten-Bestandteil aufzunehmen und wieder abzugeben,
- eine im Probenabschnitt angeordnete Reflektoranordnung mit einer zur Polymermatrix und zur Barriereanordnung hin weisenden Signalseite und mit einer der Signalseite entgegengesetzten Fluidseite,
wobei die Reflektoranordnung wenigstens einen sie durchsetzenden Durchgang aufweist, durch welchen hindurch im bestimmungsgemäßen Messbetrieb der Sensoranordnung ein Austausch des wenigstens einen Analyten-Bestandteils zwischen einer im bestimmungsgemäßen Messbetrieb das Messfluid enthaltenden äußeren Messumgebung auf der Fluidseite der Reflektoranordnung und der auf der Signalseite der Reflektoranordnung gelegenen Polymermatrix erfolgt, wobei die Reflektoranordnung dazu ausgebildet und angeordnet ist, vom Geräteabschnitt her durch die Polymermatrix auf ihre Signalseite einstrahlende Messstrahlung zurück in Richtung zum Geräteabschnitt hin zu reflektieren.

Eine solche Sensoranordnung ist aus der DE 20 2004 013 614 U1 bekannt. Die bekannte Sensoranordnung dient, wie bevorzugt auch die Sensoranordnung der vorliegenden Erfindung, der Ermittlung eines Analyten-Bestandteils, bevorzugt CO₂, eines Messfluids durch nicht-dispersive Infrarotspektrometrie, in der Fachwelt auch kurz als "NDIR"-Spektroskopie bezeichnet.

Ein zugrundeliegendes Messprinzip der vorliegenden Erfindung nutzt als Wechselwirkung zwischen dem Analyten-Bestandteil und der Messstrahlung die Absorption elektromagnetischer Strahlung einer bestimmten Wellenlänge oder eines bestimmten Wellenlängenbereichs durch den Analyten-Bestandteil. Der Analyten-Bestandteil, welcher üblicherweise physikalisch im Messfluid gelöst ist, kann über Diffusionsprozesse von der Messumgebung in die Polymermatrix diffundieren, wo er abhängig von seiner Konzentration elektromagnetische Messstrahlung einer bestimmten Wellenlänge absorbiert, während eine elektromagnetische Referenzstrahlung einer anderen Wellenlänge als Referenzwellenlänge die mit dem Analyten-Bestandteil angereicherte Polymermatrix absorptionsfrei passiert. Durch Vergleich charakteristischer Strahlungseigenschaften, wie beispielsweise der Intensität, der von der Detektorvorrichtung empfangenen Referenzstrahlung mit jener der von der Detektorvorrichtung empfangenen absorptionsbelasteten Messstrahlung gestattet die Ermittlung des Vorhandenseins des Analyten-Bestandteils im Messfluid und bei geeigneter Verfahrensführung des Messbetriebes auch die Ermittlung der Konzentration des Analyten-Bestandteils im Messfluid. Hierzu wird, nachdem der Sensoranordnungsabschnitt mit der Polymermatrix der Messumgebung ausgesetzt wurde, üblicherweise eine Zeit zu gewartet, bis der in die Polymermatrix diffundierte Anteil an Analyten-Bestandteil und der Analyten-Bestandteil im Messfluid im Gleichgewicht sind.

Als der wenigstens eine "Analyten-Bestandteil" ist in der vorliegenden Anmeldung jener wenigstens eine Bestandteil von mehreren Bestandteilen bezeichnet, welcher mit der Sensoranordnung erfasst werden soll. Die Vorbestimmung des Analyten-Bestandteils erfolgt durch die Einrichtung der Strahlungsquelle und der Detektorvorrichtung, eine elektromagnetische Strahlung auszusenden und zu empfangen, welche durch Wechselwirkung mit dem Analyten-Bestandteil modifiziert wird, beispielsweise durch Absorption. Auch die Auswahl des Materials der Polymermatrix trägt zur Vorbestimmung des durch die vorliegende Sensoranordnung erfassbaren Analyten-Bestandteils bei, denn die Moleküle des Analyten-Bestandteils müssen in die Polymermatrix eindiffundieren und aus dieser wieder ausdiffundieren können.

Die Barriereanordnung, in der DE 20 2004 013 614 U1 ein Bauteil aus Saphirglas, trennt körperlich den die Strahlungsquelle und die Detektorvorrichtung aufnehmenden Geräteabschnitt des Sensorgehäuses vom Probenabschnitt, welcher sich wenigstens bereichsweise in der äußeren Messumgebung befindet und daher mit dem Messfluid in Kontakt kommt. Die Barriereanordnung verhindert, dass in die Polymermatrix diffundierender Analyten-Bestandteil einen Raum im Geräteabschnitt erreicht, in welchem sich die Strahlungsquelle und die Detektorvorrichtung befinden. Dadurch wird sichergestellt, dass nur die in der Polymermatrix aufgenommene Menge an Analyten-Bestandteil die von der Strahlungsquelle ausgesandte und nach Durchgang durch die Polymermatrix, Reflexion an der Reflektoranordnung und erneutem Durchgang durch die Polymermatrix von der Detektorvorrichtung erfasste Messstrahlung verändert.

Die Reflektoranordnung reflektiert die auf sie auftreffenden Anteile der Referenzstrahlung und der Messstrahlung zurück zum Geräteabschnitt, wo sie von der Detektorvorrichtung erfasst werden kann. Die Reflektoranordnung dient konkurrierenden technischen Zielen und stellt deshalb einen Kompromiss zwischen diesen Zielen dar: einerseits sollte ihre reflektierende Fläche so groß wie möglich sein, um einen möglichst großen Anteil an Messstrahlung zurück in den die Detektorvorrichtung aufnehmenden Geräteabschnitt reflektieren zu können. Andererseits sollte der wenigstens eine sie durchsetzende Durchgang eine möglichst große Fläche aufweisen, um in der Polymermatrix möglichst kurze Antwortzeiten der Sensoranordnung auf eine sich ändernde Konzentration des Analyten-Bestandteils in der Messumgebung zu erreichen. Je größer die Durchgangsquerschnittsfläche der Reflektoranordnung ist, desto größer ist die Austauschfläche der Polymermatrix, über welche hinweg Moleküle des Analyten-Bestandteils von der Polymermatrix in die Messumgebung oder/und von der Messumgebung in die Polymermatrix diffundieren können. Dabei bedeutet eine Vergrößerung der Durchgangsquerschnittsfläche eine Verkleinerung der für eine Reflexion nutzbaren Fläche und umgekehrt.

Weitere eine Messstrahlung reflektierende spektroskopische Sensoranordnungen sind aus der WO 2019/074442 A1 oder aus der EP 2 887 054 A bekannt. Auch diese bekannten Sensoranordnungen arbeiten nach dem NDIR-Prinzip.

In der aus der DE 20 2004 013 614 U1 bekannten Sensoranordnung ist die Reflektoranordnung als Metallgitter oder aus Metallpartikeln bestehend ausgebildet. Die Reflektoranordnung der bekannten Sensoranordnung ist im Falle seiner Ausbildung als Metallgitter direkt auf die Polymermatrix aufgebracht und wird von dieser getragen.

Die hier diskutierten spektroskopischen Reflexions-Sensoranordnungen werden während ihrer Lebensdauer mit unterschiedlichen Messfluiden in Kontakt gebracht, um in dem jeweils präsenten Messfluid einen Analyten-Bestandteil, in der Regel quantifiziert, nachzuweisen. Dies macht eine Reinigung der Sensoranordnungen zwischen ihren Einsätzen erforderlich. Besonders vorteilhafte, also schnelle und sichere, Reinigungsverfahren erfordern eine Erwärmung zumindest des Probenabschnitts der Sensoranordnung auf deutlich über 100 °C, etwa auf 140 °C, wie dies bei sogenannten "Sterilisation-in-Place" oder kurz "SIP"-Sterilisationsverfahren und/oder "Clean-in-Place" oder kurz "CIP"-Reinigungsverfahren der Fall ist. Bei den während einer CIP-Reinigung auftretenden Temperaturen kann die Polymermatrix als das die Reflektoranordnung tragende Substrat thermisch erweichen, wodurch sich die Lage der Reflektoranordnung relativ zur Strahlungsquelle oder/und zur Detektorvorrichtung ändern kann. Mit einer solchen Änderung der Relativlage der Reflektoranordnung ändert sich jedoch die Erfassungscharakteristik der Sensoranordnung insgesamt. Dies kann zur Folge haben, dass vor einem solchen Reinigungsvorgang mit der Sensoranordnung erhaltene Ergebnisse mit Ergebnissen nach dem Reinigungsvorgang nicht mehr vergleichbar sind.

Aus der FR 3 059 770 A1 ist ein Adapterelement zur Anbingung an ein Weinfass offenbart, um mit einem nicht näher bezeichneten Sensor eine Farbe der im Weinfass aufgenommenen Flüssigkeit zu bestimmen. Das Adapterelement weist ein Sichtfenster auf, welches den Sensor vor der Flüssigkeit im Weinfass abschirmt, aber Licht durchlässt. Mit Abstand vom Sichtfenster ist ein Reflektor an lokalen Vorsprüngen des Adaptergehäuses befestigt. Die Vorsprünge sind lediglich lokal an einer Stirnseite des Adaptergehäuses angeordnet, damit die Flüssigkeit im Weinfass den Spaltraum zwischen Sichtfenster und Reflektor hinterspülen kann und so für eine Farbermittlung zugänglich ist.

Es ist daher Aufgabe der vorliegenden Erfindung, die eingangs genannte Sensoranordnung derart zu verbessern, dass sie über thermische Belastungen im Allgemeinen und bevorzugt im Bereich von 100 °C bis 150 °C, insbesondere über SIP-Sterilisationsverfahren und/oder CIP-Reinigungsverfahren, hinweg sicher einsetzbar ist und bleibt.

Diese Aufgabe löst die vorliegende Erfindung an der eingangs genannten Sensoranordnung dadurch, dass die Sensoranordnung ein von der Polymermatrix verschiedenes Abstandssicherungsmittel aufweist, welches dazu ausgebildet ist, eine Annäherung der Reflektoranordnung an die Barriereanordnung zu verhindern.

Durch das Abstandssicherungsmittel, welches auf unterschiedliche Art und Weise ausgestaltet sein kann, wird die oben geschilderte Abstandsverringerung durch Einsinken der Reflektoranordnung in die erweichte Polymermatrix verhindert und dadurch eine auch nach Erwärmung der Polymermatrix konstante Erfassungscharakteristik der Sensoranordnung erzielt.

Das Abstandssicherungsmittel ist aus ausreichend temperaturbeständigem Material gebildet, wie bevorzugt Metall, insbesondere nicht-rostender Stahl, und/oder einer Metalllegierung, oder/und aus Kunststoff, welcher bis wenigstens 200 °C nicht erweicht, wie beispielsweise Polyphenylsulfon, Polyetheretherketon (PEEK), Polyimid, Polyethylenterephthalat oder Polytetrafluorethylen oder/und aus Glas oder/und aus einem Mineral, wie beispielweise Saphirglas.

Bevorzugt bewirkt das Abstandssicherungsmittel nicht nur eine Verhinderung einer Annäherung der Reflektoranordnung an die Barriereanordnung und damit an eine die Strahlungsquelle und die Detektorvorrichtung umfassende Strahlungsbaugruppe, sondern verhindert auch eine Vergrößerung des Abstands der Reflektoranordnung von der Barriereanordnung. Besonders bevorzugt fixiert das Abstandssicherungsmittel die Reflektoranordnung relativ zur Barriereanordnung oder/und relativ zur Strahlungsbaugruppe und verhindert translatorische und rotatorische Relativbewegungen zwischen der Reflektoranordnung und der Barriereanordnung oder/und der Strahlungsbaugruppe.

Gemäß einer ersten bevorzugten Ausführungsform kann das Abstandssicherungsmittel einen an der Reflektoranordnung vorgesehenen Anlageabschnitt aufweisen, welcher sich mit einem starr mit dem Sensorgehäuse verbundenen Gegenanlageabschnitt in einem eine Annäherung des Anlageabschnitts an die Barriereanordnung verhindernden Anlageeingriff befindet. Der Gegenanlageabschnitt kann eine von der Barriereanordnung weg weisende Gegenanlagefläche zum flächigen Kontakt mit einer Anlagefläche des Anlageabschnitts aufweisen. Die Gegenanlagefläche muss nicht ausschließlich von der Barriereanordnung weg weisen, sondern kann auch eine Ausrichtungskomponente orthogonal zu der von der Barriereanordnung weg weisenden Richtung aufweisen, etwa um die Reflektoranordnung relativ zu dem den Gegenanlageabschnitt tragenden Bauteil zentrieren zu können. Der Anlage- und der Gegenanlageabschnitt können die oben für das Abstandssicherungsmittel genannten Materialien, bevorzugt nicht-rostenden Stahl, umfassen oder aus diesen gebildet sein.

Der Gegenanlageabschnitt mit der Gegenanlagefläche kann einstückig am Sensorgehäuse ausgebildet sein, etwa durch einen Absatz oder eine Schulter. Alternativ kann der Gegenanlageabschnitt durch ein gesondert vom Sensorgehäuse ausgebildetes Gegenanlagebauteil ausgebildet sein, wobei das Gegenanlagebauteil bevorzugt am Sensorgehäuse festgelegt ist, etwa durch Ankleben, Anlöten, Anschweißen, mithin durch eine stoffschlüssige Verbindung, oder/und durch Anordnen eines Gegenanlagebauteils in einer Öffnung oder Ausnehmung am Sensorgehäuse mit Presssitz, also durch eine kraftschlüssige Verbindung.

Das Sensorgehäuse ist bevorzugt vollständig oder wenigstens in einem sowohl den Probenabschnitt als auch wenigstens einen Teil des Geräteabschnitts aufweisenden Bereich ein rohrförmiges Sensorgehäuse. Das rohrförmige Sensorgehäuse erstreckt sich längs einer Gehäuseachse, die auch Rohrachse des rohrförmigen Sensorgehäuses ist. Bevorzugt reicht dann der Probenabschnitt bis zu einem Längsende des rohrförmigen Sensorgehäuses. Mit diesem Längsende wird das Sensorgehäuse der Messumgebung mit dem Messfluid ausgesetzt. Die Umgebung des den Probenabschnitt umfassenden Längsendes oder des dem Probenabschnitt nähergelegenen Längsendes des Sensorgehäuses wird in der vorliegenden Anmeldung stets als "Messumgebung" bezeichnet, auch wenn diese zwischen zwei Messbetrieben von Messfluid völlig frei ist.

Das Messfluid kann eine Flüssigkeit, ein Gas oder eine Paste sein.

Dann, wenn das Sensorgehäuse das bevorzugte rohrförmiges Sensorgehäuse ist, kann die Gegenanlagefläche des Gegenanlageabschnitts überwiegend oder vollständig in Richtung der Gehäuseachse weisen. Zur möglichen Zentrierung der Reflektoranordnung bezüglich eines vom Sensorgehäuse umgebenen Raumbereichs kann die Gegenanlagefläche eine radiale Komponente zu der das Sensorgehäuse zentral durchsetzend gedachten Gehäuseachse hin oder, weniger bevorzugt, von der Gehäuseachse weg haben.

Im Sinne der vorliegenden Anmeldung weist eine Fläche oder ein Flächenabschnitt in diejenige Richtung, in welche ihr Normalenvektor weist.

Bevorzugt ist die Reflektoranordnung mit geringem Gewicht ausgebildet, etwa durch sehr dünne Ausbildung der Reflektoranordnung. Als besonders robuste Materialien, welche sowohl gegen zahlreiche Messfluiden beständig sind als auch elektromagnetische Strahlung in einem relevanten Wellenlängenbereich gut reflektieren, haben sich Edelmetalle, wie beispielweise Gold, Silber, Platin oder nicht-rostende Stähle, bevorzugt 1.4310 oder 1.4404 oder auch sich selbst passivierende Metalle erwiesen. Die Reflektoranordnung kann daher wenigstens auf ihrer reflektierenden Signalseite, vorzugsweise jedoch vollständig, Gold, Silber, Platin, Palladium, hochlegierte nicht-rostende Stähle, Titan, Aluminium, Kupfer und dergleichen umfassen oder aus wenigstens einem dieser Materialien gebildet sein. Aufgrund der geringen Materialkosten bei gleichzeitig hoher chemischer Beständigkeit und hoher Bauteilfestigkeit umfasst die Reflektoranordnung wenigstens auf ihrer reflektierenden Signalseite, vorzugsweise von der Signalseite bis zur Fluidseite, einen nicht-rostenden Stahl. Die Reflektoranordnung kann zur Erhöhung ihrer Reflexionsfähigkeit auf ihrer reflektierenden Signalseite mit einem Edelmetall, insbesondere mit Gold, beschichtet sein. Eine sehr gute Reflexionsausbeute wird mit einer polierten Metalloberfläche, bevorzugt nicht-rostender Stahl, erzielt. Häufig kann jedoch eine kostengünstige gewöhnliche, etwa eine durch Walzbearbeitung erhaltene Oberfläche aus nicht-rostendem Stahl bereits ausreichen.

Die Fluidseite weist von der Barriereanordnung weg und weist im bestimmungsgemäßen Messbetrieb der Sensoranordnung zu einer das Messfluid enthaltenden Messumgebung hin.

Die Reflektoranordnung weist zu Erzielung eines geringen Gewichts bei gleichzeitig möglichst großer reflektierender Fläche bevorzugt eine scheibenförmige Gestalt auf. Bevorzugt ist die Reflektoranordnung nicht dicker als 200 µm, besonders bevorzugt nicht dicker als 160 µm. Um der Reflektoranordnung ausreichend Steifigkeit bzw. Stabilität zu verleihen ist diese vorzugsweise nicht dünner als 60 µm, besonders bevorzugt nicht dünner als 40 µm.

Bei einer scheibenförmigen Gestalt kann der Anlageabschnitt in einem Randbereich der scheibenförmigen Reflektoranordnung ausgebildet sein, sodass ein zentraler Bereich der Reflektoranordnung als potenziell reflektierende Fläche von der Ausbildung des Anlageabschnitts unbeeinflusst bleibt.

Grundsätzlich kann der vollständig umlaufende Randbereich der scheibenförmigen Reflektoranordnung als Anlageabschnitt ausgebildet sein, welcher beispielsweise auf einem unterbrochen oder ununterbrochen umlaufenden Gegenanlageabschnitt aufliegt. Es reicht jedoch aus, wenn in wenigstens einem Winkelsektor im Randbereich der Reflektoranordnung ein Anlageabschnitt ausgebildet ist. Ein lediglich in wenigstens einem Winkelsektor des Randbereichs der Reflektoranordnung ausgebildeter Anlageabschnitt kann beispielsweise als nach radial außen von der Reflektoranordnung auskragender Auskragabschnitt, etwa als auskragende Zunge, Vorsprung und dergleichen ausgebildet sein.

Zur Immobilisierung der Reflektoranordnung nicht nur in Richtung einer Annäherung an die Barriereanordnung sondern auch in die entgegengesetzte Richtung kann gemäß einer vorteilhaften Weiterbildung vorgesehen sein, dass wenigstens ein Teil des Randbereichs der Reflektoranordnung in einem Spaltraum aufgenommen ist, welcher in Richtung zur Barriereanordnung hin von dem Gegenanlageabschnitt und in Richtung von der Barriereanordnung weg von einem starr mit dem Sensorgehäuse verbundenen Fixierbauteil begrenzt ist. Wiederum kann das Fixierbauteil stoffschlüssig, etwa durch Schweißen, insbesondere Laserschweißen, Löten oder Kleben mit dem Sensorgehäuse verbunden sein. Alternativ oder zusätzlich kann das Fixierbauteil an einem Abschnitt des Sensorgehäuses durch einen Klemmsitz bzw. Presssitz kraftschlüssig gehalten sein. Letzteres ist insbesondere im bevorzugten Fall eines rohrförmigen Sensorgehäuses möglich, wenn ein Fixierbauteil, beispielsweise als Fixierring, radial innerhalb eines das Fixierbauteil umgebenden Gehäuseabschnitts mit Presssitz angeordnet ist. Hierzu kann beispielsweise das Fixierbauteil stark abgekühlt und somit thermisch geschrumpft in den gewünschtenfalls erwärmten und somit thermisch gedehnten Gehäuseabschnitt eingesetzt werden, woraufhin man die Temperaturen von Fixierbauteil und Gehäuseabschnitt einander angleichen lässt.

Um unerwünschtes Bewegungsspiel zu vermeiden, kann der Anlageabschnitt der Reflektoranordnung im fertig montierten Zustand der Sensoranordnung sowohl am Gegenanlageabschnitt als auch am Fixierbauteil anliegen und kann zwischen diesen Formationen geklemmt sein.

Alternativ oder zusätzlich kann das Abstandssicherungsmittel einen Abstützabschnitt an der Reflektoranordnung aufweisen, welcher sich körperlich an der Barriereanordnung abstützt. Beispielsweise kann die Reflektoranordnung einen oder mehrere zur Barriereanordnung hin abstehende Vorsprünge als den Abstützabschnitt aufweisen, welche wie ein Abstandshalter eine körperliche Barriere gegen eine Annäherung der Reflektoranordnung an die Barriereanordnung bilden. Ebenso kann ein solcher Abstützabschnitt am Rand der Reflektoranordnung ausgebildet sein, sodass wiederum ein zentraler Bereich der Reflektoranordnung, durch den Abstützabschnitt unbeeinflusst, die auf die Reflektoranordnung einstrahlende Messstrahlung reflektieren kann. Beispielsweise kann die Reflektoranordnung topfförmig ausgestaltet sein, wobei die Mantelfläche der topfförmigen Gestalt den Abstützabschnitt bildet und der scheibenförmige Boden der topfförmigen Gestalt den wenigstens einen Durchgang sowie auf der Signalseite einen die Messstrahlung reflektierenden Flächenabschnitt aufweist. Statt einer umlaufenden Mantelfläche kann der Abstützabschnitt durch wenigstens zwei, vorzugsweise mehr als zwei, in Umlaufrichtung um einen zentralen Bereich der Reflektoranordnung mit Abstand voneinander angeordnete Vorsprünge aufweisen.

Weiter zusätzlich oder alternativ kann das Abstandssicherungsmittel einen kraftoder/und stoffschlüssigen Eingriff eines Halteabschnitts der Reflektoranordnung mit einem Gegenhalteabschnitt des Sensorgehäuses aufweisen. So kann der Halteabschnitt mit einem am Sensorgehäuse oder an einem fest mit dem Sensorgehäuse verbundenen Bauteil ausgebildeten Gegenhalteabschnitt verklebt, verschweißt, verlötet oder, bei ausreichend stabiler Ausbildung des Halteabschnitts, kraft- bzw. reibschlüssig am Gegenhalteabschnitt fixiert sein, etwa durch Presssitz. Zur besonders sicheren Festlegung der Reflektoranordnung am Sensorgehäuse kann der oben genannte Abstützabschnitt auch Halteabschnitt sein. Beispielsweise kann die oben genannte Mantelfläche einer topfförmig gestalteten Reflektoranordnung mit ihrem freien Rand auf der Barriereanordnung gestützt und mit ihrer radial nach außen weisenden Seite mit dem Sensorgehäuse oder einem am Sensorgehäuse festgelegten Bauteil verklebt, verlötet oder verschweißt sein.

Ebenso kann der vorstehend genannte Anlageabschnitt auch Halteabschnitt sein, etwa wenn der Anlageabschnitt mit dem Gegenanlageabschnitt stoffschlüssig verbunden ist, also beispielsweise verklebt, verlötet oder verschweißt ist.

Wenngleich vorstehend eine topfförmige oder scheibenförmige Reflektoranordnung mit Vorsprüngen genannt ist, kann die Reflektoranordnung vollständig scheibenförmig und eben ausgebildet sein. Dann kann die Reflektoranordnung einfach als Stanzbauteil oder durch Laserschneiden eines dünnen ebenen Lagenmaterials gebildet sein. Im bevorzugten Fall eines rohrförmigen Sensorgehäuses ist eine ebene Reflektoranordnung oder ein ebener reflektierender Abschnitt der Reflektoranordnung bevorzugt orthogonal zur Gehäuseachse ausgerichtet angeordnet.

Die Reflektoranordnung ist zur erleichterten Herstellung bevorzugt einstückig ausgebildet, einschließlich Anlageabschnitt oder/und Abstützabschnitt oder/und Halteabschnitt.

Insbesondere dann, wenn die Strahlungsquelle oder/und die Detektorvorrichtung bezüglich der Reflektoranordnung asymmetrisch ausgebildet oder/und angeordnet ist bzw. sind, kann eine Verdrehung der Reflektoranordnung um eine eine reflektierende Fläche auf der Signalseite der Reflektoranordnung orthogonal durchsetzende Bezugsachse, insbesondere um eine zur oben genannten Gehäuseachse parallele Bezugsachse oder um die Gehäuseachse, Auswirkungen auf die Signalqualität des von der Detektorvorrichtung erfassten reflektierten Messsignals haben.

Daher kann die Reflektoranordnung ein Verdrehsicherungsmittel aufweisen, welches eine Verdrehung der Reflektoranordnung relativ zum Sensorgehäuse verhindert bzw. welches eine Anordnung der Reflektoranordnung relativ zum Sensorgehäuse in nur wenigstens einem vorbestimmten Relativdrehstellungbereich, insbesondere in nur wenigstens einer vorbestimmten Relativdrehstellung, gestattet.

Bevorzugt ist das Verdrehsicherungsmittel das vorstehend genannte Abstandssicherungsmittel. Die Reflektoranordnung kann, insbesondere an ihrem Randbereich, eine Verdrehsicherungsformation in Gestalt eines Vorsprungs oder einer Ausnehmung aufweisen und das Sensorgehäuse oder ein fest mit dem Sensorgehäuse verbundenes Bauteil kann eine Verdrehsicherungsgegenformation in Gestalt einer Ausnehmung oder eines Vorsprungs aufweisen. Eine Formation aus Verdrehsicherungsformation und Verdrehsicherungsgegenformation kann bei betriebsbereiter Anordnung der Reflektoranordnung am Sensorgehäuse formschlüssig in die jeweils andere Formation eingreifen und so eine bestimmungsgemäße Anordnung der Reflektoranordnung am Sensorgehäuse nur dann zulassen, wenn die Verdrehsicherungsformation und die Verdrehsicherungsgegenformation relativ zueinander derart orientiert sind, dass sie in Formschlusseingriff miteinander gelangen können.

Die Verdrehsicherungsformation kann bei scheibenförmiger Gestalt der Reflektoranordnung durch eine nicht-rotationssymmetrische Gestalt des Randes der Reflektoranordnung erreicht werden. Die Verdrehsicherungsgegenformation kann dann eine entsprechend komplementär berandete Ausnehmung oder Einsenkung aufweisen, in welche die Reflektoranordnung nur in wenigstens einer diskreten Winkelstellung relativ zum Sensorgehäuse eingeführt werden kann. Beispielsweise kann die Reflektoranordnung zur Ausbildung der Verdrehsicherungsformation polygonal berandet sein.

Das Polymermaterial der Polymermatrix kann ein Silikon, Fluorosilikon, Polytetrafluorethylen (PTFE), Flurethylenpropylen (FEP) oder/und Polymethylpenten (PMP) umfassen oder sein. Diese Polymermaterialien gestatten eine Migration zahlreicher bekannter Analyten, welche eine elektromagnetische Strahlung bekannter Wellenlänge modifizieren, insbesondere absorbieren, in die Materialien hinein und wieder aus diesen hinaus. Bevorzugt ist der Analyt der vorliegenden Sensoranordnung CO₂.

Zur Vermeidung von Gas-Speicherräumen erstreckt sich Polymermaterial bevorzugt von der Barriereanordnung durchgehend bis zur Reflektoranordnung. Das Polymermaterial der Polymermatrix, bevorzugt Silikon, ist gemäß einer bevorzugten Ausführungsform auf die Reflektoranordnung aufgetragen und an dieser vernetzt. Die Polymermatrix haftet daher an der Reflektoranordnung. Es soll jedoch nicht ausgeschlossen sein, dass eine bereits vernetzte Silikonlage an der Reflektoranordnung angeordnet und mit dieser adhäsiv verbunden ist.

Eine Verbindung der Polymermatrix mit der Barriereanordnung ist bevorzugt durch eine adhäsive Schicht hergestellt, welche die von der Reflektoranordnung weg weisende Oberfläche der Polymermatrix mit einer Oberfläche der Barriereanordnung verbindet. Bevorzugt handelt es sich bei der adhäsiven Schicht um ein Material, welches aus der gleichen Kunststoffklasse ausgewählt ist, zu welcher das Material der Polymermatrix gehört. Ist die Polymermatrix ein Silikon, wird auch als adhäsive Schicht bevorzugt ein Silikon verwendet. Die Polymermatrix ist folglich bevorzugt stoffschlüssig über die adhäsive Schicht mit der Barriereanordnung verbunden. Um auch neben der Polymermatrix Gas-Speicherräume auszuschließen, in welchen sich der Analyten-Bestandteil ansammeln und so das Erfassungsergebnis der Sensoranordnung verfälschen kann, füllt bevorzugt das Polymermaterial der Polymermatrix, gegebenenfalls zusammen mit dem Polymermaterial der adhäsiven Schicht zur Verbindung der Polymermatrix mit der Barriereanordnung, einen Hohlraum vollständig aus, welcher von der Barriereanordnung, von der Reflektoranordnung und von einem zwischen der Barriereanordnung und der Reflektoranordnung gelegenen Abschnitt des Sensorgehäuses oder eines am Sensorgehäuse aufgenommenen Bauteils begrenzt ist. Das Polymermaterial der Polymermatrix, gegebenenfalls zusammen mit dem Polymermaterial der adhäsiven Schicht, grenzt somit, außer an dem wenigstens einen Durchgang der Reflektoranordnung, bevorzugt allseits an einen Festkörper.

Zum Schutz der Reflektoranordnung vor Bestandteilen des Messfluids kann sich sowohl auf der Signalseite als auch auf der Fluidseite Polymermaterial befinden. Da das Polymermaterial auf der Fluidseite im Wesentlichen nur der Abschirmung der Reflektoranordnung dient, während das Polymermaterial auf der Signalseite der Aufnahme des Analyten-Bestandteils dient, kann zur Erzielung eines möglichst vorteilhaften Signal-Rausch-Verhältnisses die auf der Signalseite angeordnete Polymermatrix eine größere Fläche der Reflektoranordnung bedecken oder/und eine größere Dicke aufweisen als eine auf der Fluidseite angeordnete Schicht aus Polymermaterial. Zusätzlich oder alternativ kann zur Erhöhung der Gebrauchsdauer der Sensoranordnung vorgesehen sein, dass die auf der Signalseite angeordnete Polymermatrix eine höhere Wärmebeständigkeit oder/und einen geringeren Wärmedehnungskoeffizienten aufweist als die auf der Fluidseite aufgetragene Schicht aus Polymermaterial. Eine Temperaturänderung im Bereich des Probenabschnitts hat dann auf die für die Sensoranordnung wesentliche Funktionsschicht, nämlich der Polymermatrix, eine möglichst geringe Auswirkung. Durch den möglichst geringen Wärmedehnungskoeffizienten kann eine mechanische Belastung der Reflektoranordnung durch Erwärmung der Polymermatrix verringert oder sogar vermieden werden.

Damit sichergestellt ist, dass der wenigstens eine Analyten-Bestandteil durch die Polymerschicht auf der Fluidseite hindurch in die Polymermatrix migrieren kann, ist vorzugsweise die Polymerschicht auf der Fluidseite aus der gleichen Kunststoffklasse ausgewählt wie die Polymermatrix. Im vorliegend bevorzugten Beispiel ist auch die Polymerschicht auf der Fluidseite bevorzugt ein Silikon.

Vorzugsweise ist die Polymermatrix auf der Signalseite 3 bis 5 mal so dick wie die Polymerschicht auf der Fluidseite der Reflektoranordnung. Die Polymermatrix auf der Signalseite kann bevorzugt 140 bis 180 µm dick sein, besonders bevorzugt ist sie 160 µm dick. Die Polymerschicht auf der Fluidseite kann bevorzugt 30 bis 60 µm dick sein, besonders bevorzugt ist sie 40 bis 50 µm dick. Die Polymerschicht auf der Fluidseite kann aus wenigstens zwei Teilschichten gebildet sein, beispielsweise aus der genannten Schutzschicht und aus einer auf die von der Reflektoranordnung weg weisende Seite der Schutzschicht aufgetragene Siegelschicht. Die Siegelschicht kann nach einer Montage der Reflektoranordnung am Probenabschnitt aufgetragen werden, um die Reflektoranordnung und etwaige Spalt- oder/und Zwickelräume zwischen der Reflektoranordnung und dem sie umgebenden Probenabschnitt aufzufüllen bzw. zu versiegeln. Die Siegelschicht kann 5 bis 15 µm dick sein, vorzugsweise 10 µm. Die oben genannte adhäsive Schicht zwischen der Polymermatrix und der Barriereanordnung kann bevorzugt 5 bis 45 µm dick sein, vorzugsweise 40 µm. Die Polymermatrix, die Polymerschicht auf der Fluidseite und die adhäsive Schicht können zur Erzielung einer besonders vorteilhaften homogenen Polymerformation aus ein und demselben Polymer, bevorzugt aus Silikon, gebildet sein.

Bevorzugt ist die Polymermatrix dicker als die Reflektoranordnung, welche bevorzugt wiederum dicker als die Schutzschicht ist.

Eine weitere vorteilhafte Weiterbildung der vorliegenden Erfindung betrifft die optimale Ausnutzung der von der Strahlungsquelle ausgesandten Messstrahlung zur Erzielung eines von der Detektorvorrichtung erfassbaren Signals bei gleichzeitig kurzer Ansprechzeit der Polymermatrix auf eine Veränderung des Gehalts an Analyten-Bestandteil im Messfluid der Messumgebung. Wie eingangs geschildert, erfordert eine optimale Ausnutzung der Messstrahlung eine möglichst große reflektierende Fläche der Reflektoranordnung. Kurze Messzyklen erfordern, widerstreitend hierzu, die Erzielung einer kurzen Ansprechzeit eine möglichst große Durchgangsfläche durch die Reflektoranordnung. Aufgrund der begrenzten Gesamtfläche der Reflektoranordnung ist eine Vergrößerung der Durchgangsfläche nur zulasten der reflektierenden Fläche erzielbar und umgekehrt. Ein sehr guter Kompromiss aus beiden widerstreitenden Zielsetzungen ergibt sich durch eine Ausbildung der Reflektoranordnung, bei welcher die Reflektoranordnung eine Mehrzahl von die Reflektoranordnung durchsetzenden Durchgängen aufweist, wobei die Durchgänge, über die für den wenigstens einen Analyten-Bestandteil zugängliche Fläche der Fluidseite oder/und über den für Messstrahlung nicht abgeschatteten Bereich der Signalseite der Reflektoranordnung betrachtet, heterogen verteilt ausgebildet oder/und angeordnet sind. Es soll jedoch nicht ausgeschlossen sein, dass die Durchgänge über die für den wenigstens einen Analyten-Bestandteil zugängliche Fläche der Fluidseite oder/und über den für Messstrahlung nicht abgeschatteten Bereich der Signalseite der Reflektoranordnung betrachtet, homogen verteilt ausgebildet oder/und angeordnet sind, also mit einheitlicher Größe in einem regelmäßigen Muster mit einheitlichen Abständen der Durchgänge längs der jeweiligen Folgerichtungen des Musters, in welchen Durchgänge im Muster aufeinander folgend angeordnet sind.

Die vorliegende Anmeldung betrifft als eigenständigen Gegenstand auch eine Sensoranordnung der eingangs genannten Art, deren Reflektoranordnung eine Mehrzahl von die Reflektoranordnung durchsetzenden Durchgängen aufweist, wobei die Durchgänge, über die für den wenigstens einen Analyten-Bestandteil zugängliche Fläche der Fluidseite der Reflektoranordnung betrachtet, heterogen verteilt ausgebildet oder/und angeordnet sind, oder mit anderen Worten eine Kombination des Oberbegriffs des Anspruchs 1 mit den Merkmalen des Anspruchs 10. Dieser Gegenstand kann entsprechend der obigen Beschreibung, also insbesondere mit den Merkmalen des kennzeichnenden Teils des Anspruchs 1 oder/und wenigstens eines der Ansprüche 2 bis 9 weitergebildet sein.

Durch die Ausbildung einer Mehrzahl von Durchgängen sowie durch deren heterogen verteilte Anordnung über einen sowohl die Durchgänge als auch die reflektierende Fläche aufweisenden Bereich der Reflektoranordnung kann wenigstens ein Bereich mit erhöhter Durchgangsquerschnittsfläche und wenigstens ein weiterer Bereich mit erhöhter reflektierender Fläche ausgebildet werden, wobei jeder der beiden Bereiche bevorzugt größer als ein Viertel der gesamten auf der Signalseite für Messstrahlung nicht abgeschatteten Fläche der Signalseite, insbesondere größer als ein Viertel des sich quer, insbesondere orthogonal, zu der oben genannten Gehäuseachse erstreckenden Abschnitts der Reflektoranordnung ist.

Zur Erzielung oben genannten Heterogenität der Durchgänge in der Reflektoranordnung kann die Reflektoranordnung Durchgänge mit unterschiedlichen Durchgangsquerschnittsflächen, also unterschiedlich große Durchgänge, aufweisen. Zusätzlich oder alternativ kann die Reflektoranordnung Durchgänge mit unterschiedlichen Durchgangsquerschnittsgestalten aufweisen. Weiter zusätzlich oder alternativ kann die Reflektoranordnung auf ihrer für den wenigstens einen Analyten-Bestandteil zugänglichen Fläche der Fluidseite Flächenbereiche unterschiedlicher Durchgangsdichte aufweist, also Flächenbereiche in welchen pro Flächeneinheit mehr Durchgänge angeordnet sind als in anderen Flächenbereichen.

Der Flächenanteil von Durchgangsquerschnittsflächen an der Gesamtfläche des für Messstrahlung nicht abgeschatteten Bereichs der Signalfläche beträgt bevorzugt mindestens 20 %, besonders bevorzugt mindestens 25 % und höchst bevorzugt mindestens 30 %. Der Flächenanteil beträgt bevorzugt höchstens 50 %, besonders bevorzugt höchstens 42,5 % und höchst bevorzugt höchstens 35 %.

Die in der vorliegenden Anmeldung für den Analyten-Bestandteil zugängliche Fläche der Fluidseite der Reflexionsanordnung entspricht jener Fläche der Fluidseite, gegebenenfalls wie oben beschrieben mit Polymermaterial, also etwa mit einer Schutzschicht und einer auf diese aufgetragenen Siegelschicht, beschichtet, welche vom Messfluid benetzbar ist.

Die Strahlungsquelle, bevorzugt eine LED, strahlt in der Regel elektromagnetische Strahlung längs einer optischen Achse ab. Die Abstrahlung kann in einem Strahlungskegel erfolgen, dessen Kegelachse die optische Achse der Strahlungsquelle ist. Gemäß einer bevorzugten Ausführungsform kann die Reflektoranordnung zur Erzielung einer möglichst hohen Ausbeute an reflektierter Strahlung auf ihrer Signalseite in einem kreisförmigen Bereich einen um wenigstens 20 Prozent geringeren Flächenanteil von Durchgangsquerschnittsflächen an der Bereichsfläche aufweisen als in einem flächengleichen, den kreisförmigen Bereich umgebenden ringförmigen Bereich. Der kreisförmige Bereich enthält als Mittelpunkt einen Auftreffort, an dem eine von der Strahlungsquelle ausgehende optische Achse auf die Signalseite auftrifft.

Der Flächeninhalt des kreisförmigen Bereichs beträgt wenigstens 10 %, vorzugsweise wenigstens 20 %, der gesamten auf der Signalseite für Messstrahlung nicht abgeschatteten Fläche der Signalseite. Zur Klarstellung: hier ist nicht ein um 20 Prozentpunkte geringerer Flächenanteil von Durchgangsquerschnittsflächen bezeichnet, sondern tatsächlich ein um 20 % geringerer Flächenanteil. Der ringförmige Bereich umgibt den kreisförmigen Bereich vorzugsweise konzentrisch und ist vorzugsweise kreisringförmig. Die gesamte auf der Signalseite vom Sensorgehäuse nicht abgeschattete Fläche der Reflektoranordnung schließt die für Messstrahlung nicht abgeschatteten Durchgangsquerschnittsflächen mit ein.

Durch die Anordnung einer durchgangsarmen Zone im Auftreffbereich der optischen Achse der Strahlungsquelle kann sichergestellt werden, dass ein signifikanter Anteil der von der Strahlungsquelle emittierten elektromagnetischen Strahlung dort, wo er auf eine reflektierende Fläche auf der Signalseite auftrifft, zurück zum Geräteabschnitt reflektiert wird. **In** einem mit größerer Entfernung von dem Auftreffbereich der optischen Achse auf der Signalseite gelegenen Bereich kann dagegen für eine möglichst große Diffusionsaustauschfläche an der Polymermatrix gesorgt werden, indem dort ein erhöhter Anteil an Durchgängen vorgesehen ist.

Zusätzlich oder alternativ kann die Signalseite der Reflektoranordnung in einem kreisförmigen Bereich, welcher als Mittelpunkt die Flächenmitte der gesamten auf der Signalseite für Messstrahlung nicht abgeschatteten Fläche der Signalseite hat und dessen Flächeninhalt wenigstens 10 %, vorzugsweise wenigstens 20 %, der gesamten auf der Signalseite für Messstrahlung nicht abgeschatteten Fläche der Reflektoranordnung entspricht, einen um wenigstens 20 Prozent geringeren Flächenanteil von Durchgangsquerschnittsflächen an der Bereichsfläche aufweisen als in einem flächengleichen, den kreisförmigen Bereich umgebenden ringförmigen Bereich. Der ringförmige Bereich umgibt dabei den zentralen Bereich bevorzugt konzentrisch und ist bevorzugt selbst kreisringförmig. Bei Anordnung einer durchgangsarmen Zone in einem zentralen Bereich der nicht abgeschatteten Fläche kann der Bauraum zur Aufnahme sowohl der Strahlungsquelle als auch der Detektorvorrichtung ungefähr hälftig auf beide Vorrichtungen aufgeteilt werden. Häufig wird der Auftreffbereich der optischen Achse auf die Signalseite der Reflektoranordnung in einem zentralen Bereich der durch das Sensorgehäuse nicht abgeschatteten Fläche liegen.

Für die Beurteilung der für Messstrahlung nicht abgeschatteten Fläche der Signalseite kommt es auf eine Abschattung der Signalseite durch Abschattungsformationen im Bereich zwischen der Strahlungsbaugruppe und der Reflektoranordnung an.

Die oben genannten kreisförmigen Bereiche mit einem Flächeninhalt von wenigstens 10 %, vorzugsweise wenigstens 20 % der gesamten auf der Signalseite für Messstrahlung nicht abgeschatteten Fläche der Reflektoranordnung sind bevorzugt nicht größer als 35 %, besonders bevorzugt nicht größer als 25 % der nicht abgeschatteten Fläche.

Bevorzugt ist wenigstens eine Mehrzahl von Durchgängen, besonders bevorzugt sind alle Durchgänge, kreisförmige Ausnehmungen mit einem Durchmesser von 0,5 mm bis 1,2 mm, bevorzugt von 0,8 mm bis 1,0 mm. Diese lassen sich sehr gut unterschiedlich dicht auf der für den wenigstens einen Analyten-Bestandteil zugänglichen Fläche der Fluidseite bzw. auf der für Messstrahlung nicht abgeschatteten Fläche der Signalseite verteilen.

Eine weitere mögliche Ausgestaltung der Heterogenität der Durchgänge in der Reflektoranordnung kann dadurch realisiert sein, dass in der der gesamten auf der Signalseite für Messstrahlung nicht abgeschatteten Fläche der Reflektoranordnung ein kreisförmiger Bereich existiert, dessen Flächeninhalt wenigstens dem 1,3-Fachen der durchschnittlichen Querschnittsfläche der Durchgänge in der gesamten auf der Signalseite für Messstrahlung nicht abgeschatteten Fläche der Reflektoranordnung entspricht und welcher frei ist von einer Durchgangsquerschnittsfläche. Dies gilt vor allem für Reflektoranordnungen, deren einzelne Durchgänge Durchgangsquerschnittsflächen von jeweils nicht mehr als 1 mm², vorzugsweise von jeweils nicht mehr als 0,8 mm² aufweisen. Die Durchgangsquerschnittsflächen der einzelnen Durchgänge betragen bevorzugt jeweils mindestens 0,2 mm².

Bevorzugt weist wenigstens der Probenabschnitt des rohrförmigen Sensorgehäuses einen Durchmesser von nicht mehr als 12 mm auf, wobei das die Außenfläche des Sensorgehäuses wenigstens im Probenabschnitt bevorzugt zylindrisch oder konisch ist. Bevorzugt weist auch wenigstens ein die Strahlungsbaugruppe aufnehmender Teil des Geräteabschnitts einen Durchmesser von nicht mehr als 12 mm auf.

Die Detektorvorrichtung weist eine für Messstrahlung empfindliche Detektorfläche auf. Die Detektorfläche ist häufig rechteckig, wenngleich dies nicht zwingend so sein muss. Um sowohl die Strahlungsquelle als auch die Detektorvorrichtung in möglichst geringem Bauraum unterbringen zu können, befindet sich bevorzugt eine Strahlungsaustrittsfläche der Strahlungsquelle näher bei der Barriereanordnung als die Detektorfläche. Ebenfalls zur Verringerung des von der Strahlungsbaugruppe zu ihrer Aufnahme am Sensorgehäuse in Anspruch genommenen Bauraums kann zusätzlich oder alternativ die optische Achse der Strahlungsquelle bezüglich einer Gehäuseachse, längs welcher sich das Sensorgehäuse erstreckt, stärker geneigt sein als eine Normale auf die Detektorfläche. Beispielsweise kann die Detektorfläche orthogonal zu einer Parallelen der Gehäuseachse ausgerichtet sein oder mit einer Parallelen der Gehäuseachse einen Winkel von nicht weniger als 75°, vorzugsweise nicht weniger als 80° einschließen. Die Normale auf die Detektorfläche ist dann parallel zu einer Parallelen der Gehäuseachse oder schließt mir dieser einen Winkel von 15° oder 10° ein. Die optische Achse der Strahlungsquelle kann dagegen mit einer Parallelen der Gehäuseachse bzw. mit der Normalen auf die Detektorfläche einen Winkel von zwischen 15° und 35°, insbesondere von 17° bis 25°, besonders bevorzugt von 19° bis 21° einschließen.

Zu Erleichterung der Montage der Sensoranordnung können die Strahlungsquelle und die Detektorvorrichtung in einer gemeinsamen Halterung im Geräteabschnitt aufgenommen sein. Die gemeinsame Halterung kann aus einem gut wärmeleitenden Material, insbesondere aus Metall hergestellt sein, um vor allem Wärme von der Strahlungsquelle abzuführen. Bevorzugt ist das Sensorgehäuse wenigstens in dem die Halterung aufnehmenden Teil des Geräteabschnitts ebenfalls aus gut wärmeleitendem Material hergestellt, wiederum bevorzugt aus Metall. Aus Gründen hoher chemischer Beständigkeit und hoher Festigkeit ist das Sensorgehäuse wenigstens in dem die Halterung aufnehmenden Teil des Geräteabschnitts oder/und ist ebenso die Halterung besonders bevorzugt aus nicht-rostendem hochlegiertem Stahl hergestellt. Die Halterung steht vorzugsweise mit einer Innenwandfläche des Geräteabschnitts des Sensorgehäuses in Berührkontakt, sodass die Halterung von der Strahlungsquelle ausgehende Wärme konduktiv an das Sensorgehäuse übertragen kann.

Zur Vermeidung einer Überhitzung der Detektorvorrichtung in der Halterung kann zwischen der Detektorvorrichtung und der Halterung eine thermisch isolierende Schicht angeordnet sein. Die thermisch isolierende Schicht hat bevorzugt eine um wenigstens eine Größenordnung geringere Wärmeleitfähigkeit als das Material der Halterung. Beispielsweise kann die Detektorvorrichtung in einer sie vollständig umgebenden zylindrischen oder kegelstumpfförmigen Hülse aufgenommen sein, welche an ihren beiden Stirnseiten offen ist, um an einem Längsende die Einstrahlung von elektromagnetischer Strahlung auf die Detektorfläche sicherzustellen und um am entgegengesetzten Längsende signalübertragende Leitungen von der Detektorvorrichtung wegführen zu können, welche Erfassungssignale der Detektorvorrichtung an eine Signalverarbeitungselektronik übertragen oder/und welche Steuersignale von einer Steuerungselektronik an die Detektorvorrichtung übertragen. Die thermisch isolierende Schicht kann aus Kunststoff, etwa aus Polyetheretherketon (PEEK), Polyphenylsulfon, oder aus Polyimiden gebildet sein.

Für eine Temperaturkompensation der Erfassungssignale der Detektorvorrichtung ist es vorteilhaft, wenn ein Strahlungsbaugruppe-Temperatursensor derart angeordnet ist, dass er die Temperatur im Bereich der die Strahlungsquelle und die Detektorvorrichtung aufweisenden Strahlungsbaugruppe, insbesondere die Temperatur der Halterung oder/und die Temperatur in einem von elektromagnetischer Strahlung der Strahlungsquelle durchstrahlten Volumen zwischen Halterung und Barriereanordnung erfasst. Bevorzugt kann die Halterung den Strahlungsbaugruppe-Temperatursensor zur Erfassung einer Temperatur tragen. Auch der Strahlungsbaugruppe-Temperatursensor weist eine signalübertragende Leitung auf, welche, vorzugsweise auf der von der Barriereanordnung abgewandten Seite der Halterung, vom Strahlungsbaugruppe-Temperatursensor weg verläuft.

Weiter kann daran gedacht sein, einen von der Barriereanordnung ausgehenden, in Richtung vom Probenabschnitt weg verlaufenden Bereich der Sensoranordnung dauerhaft zu verwenden und den Probenabschnitt als einen Sensorgehäuseteil lösbar an dem übrigen, den Geräteabschnitt aufweisenden Sensorgehäuseteil anzuordnen. Hierzu kann die Barriereanordnung geteilt sein in einen geräteseitigen Barriereanordnungsteil und in einen fluidseitigen Barriereanordnungsteil. Ebenso kann das Sensorgehäuse unterteilt sein in einen den geräteseitigen Barriereanordnungsteil tragenden geräteseitigen Gehäuseteil und in einen den fluidseitigen Barriereanordnungsteil tragenden fluidseitigen Gehäuseteil. Im betriebsbereit montierten Zustand liegen bevorzugt die beiden Barriereanordnungsteile aneinander an oder befinden sich durch einen Luftspalt voneinander getrennt, wobei bevorzugt der Luftspalt kleiner ist als die kombinierte Dicke der beiden Barriereanordnungsteile, um unerwünscht große Aberrationen durch mehrfache Brechung der Messstrahlung an Übergängen unterschiedlicher Dichte, also etwa an Grenzflächen der Barriereanordnungsteile zu vermeiden. Als austauschbarer Gegenstand kann der fluidseitige Barriereanordnungsteil gemeinsam mit der Polymermatrix und der Reflektoranordnung am fluidseitigen Gehäuseteil aufgenommen und bestimmungsgemäß lösbar mit dem geräteseitigen Gehäuseteil gekoppelt sein. Der fluidseitige Gehäuseteil kann auf den geräteseitigen Gehäuseteil aufsteckbar oder aufschraubbar sein. Der fluidseitige Gehäuseteil kann beispielsweise durch eine Bajonettverriegelung am geräteseitigen Gehäuseteil verliergesichert sein.

Abweichend vom vorstehend Gesagten kann die Barriereanordnung vollständig am geräteseitigen Gehäuseteil angeordnet sein. Der fluidseitige Gehäuseteil kann dann die Polymermatrix und die Reflektoranordnung sowie gegebenenfalls auf der Fluidseite der Reflektoranordnung eine wie oben beschrieben ausgebildete Schutzschicht aufweisen.

Ebenso kann die Barriereanordnung vollständig am fluidseitigen Gehäuseteil angeordnet sein, wenngleich dies nicht bevorzugt ist, da die Barriereanordnung die im geräteseitigen Gehäuseteil angeordneten Bauteile, wie Strahlungsquelle, Sensor und etwaige weitere elektronische Bauteile, vor äußeren Einflüssen schützt.

Der fluidseitige Gehäuseteil kann, beispielsweise als eine Art Kappe, an dem geräteseitigen Gehäuseteil lösbar anordenbar sein. Dabei kann der fluidseitige Gehäuseteil ein gesondertes loses Gehäuseteil sein. Alternativ kann der fluidseitige Gehäuseteil mit einer Wand eines Gefäßes, wie beispielsweise eines Bioreaktors, welches das Messfluid enthält oder welches vom Messfluid durchströmt wird, verbunden sein.

Dann, wenn der fluidseitige Gehäuseteil wenigstens einen Wandabschnitt aufweist, welcher aus einem Material hergestellt ist, dass mit einem Material einer Gefäßwand des das Messfluid aufnehmenden oder vom Messfluid durchströmten Gefäßes kompatibel ist, kann der Wandabschnitt des fluidseitigen Gehäuseteils einstückig mit der Gefäßwand oder wenigstens einem Abschnitt der Gefäßwand ausgebildet oder verbunden sein.

Beispielsweise können dann, wenn die Gefäßwand aus einem Kunststoff hergestellt ist und wenn ein Wandabschnitt des fluidseitigen Gehäuseteils aus demselben oder einem kompatiblen Kunststoff hergestellt ist, die Gefäßwand und der Wandabschnitt des fluidseitigen Gehäuseteils miteinander durch Kunststoffschweißen verschweißt sein oder können einstückig, beispielsweise durch Spritzgießen, ausgebildet sein. Entsprechendes gilt für eine aus Metall hergestellte Gefäßwand und einen aus Metall hergestellten Wandabschnitt des fluidseitigen Gehäuseteils. Auch diese können beispielsweise miteinander durch Verschweißen unlösbar verbunden sein oder können einstückig ausgebildet sein, etwa durch Tiefziehen oder/und durch Zerspanen.

Eine Schweißverbindung hat den Vorteil, dass sie bei korrekter Ausführung nicht nur eine sichere und feste Verbindung schafft, sondern auch die Dichtigkeit dieser Verbindung gegen einen Durchtritt von Messfluid durch die Fügestelle verhindert.

Grundsätzlich ist auch eine Verklebung von Gefäßwand und Wandabschnitt des fluidseitigen Gehäuseteils denkbar. Demgegenüber ist jedoch die Schweißverbindung bevorzugt, da diese ohne Klebstoffe auskommt, sodass bei Schweißverbindungen kein oder nahezu kein Risiko einer Migration von Werkstoffkomponenten aus der Fügeverbindung, etwa in das Messfluid, besteht. Sofern jedoch ausreichend inerte Klebstoffe zur Verfügung stehen, welche durch das Messfluid oder durch ein das Gefäß gegebenenfalls reinigendes Waschfluid nicht gelöst werden können, sind auch Klebeverbindungen für Reaktoren für biologisch oder/und chemisch sensible Prozesse anwendbar.

Für den Fall der Verwendung inkompatibler Werkstoffe für die Gefäßwand einerseits und für den Wandabschnitt des fluidseitigen Gehäuseteils andererseits kann eines von beiden Bauteilen aus Wandabschnitt des Gefäßes zur Aufnahme oder Durchleitung von Messfluid und Wandabschnitt des fluidseitigen Gehäuseteils, insbesondere der Wandabschnitt des fluidseitigen Gehäuseteils, eine Ankerstruktur aufweisen, welche in das Material des jeweils anderen Bauteils hineinreicht und dort vom Material des anderen Bauteils umgeben ist bzw. in das Material des jeweils anderen Bauteils eingebettet ist. Dadurch kann das eine Bauteil am anderen Bauteil formschlüssig verankert sein.

Bevorzugt wird das Bauteil mit dem steiferen Material, etwa mit dem Material mit dem betragsmäßig größeren Elastizitätsmodul, die Ankerstruktur aufweisen und wird das Bauteil mit dem weniger steifen Material, die Ankerstruktur umgeben bzw. in sich einbetten.

Die Ankerstruktur kann eine zum jeweils anderen Bauteil hin auskragende Struktur sein, wie beispielsweise im Falle des fluidseitigen Gehäuseteils als Träger der Ankerstruktur eine radial bezüglich einer Gehäuseachse als einer Mittellängsachse des fluidseitigen Gehäuseteils vom fluidseitigen Gehäuseteil nach radial außen abstehende Scheibenstruktur, Strebenstruktur oder Gitterstruktur und dergleichen. Die Ankerstruktur ist bevorzugt möglichst flach, also weist eine möglichst geringe axiale Abmessung längs der Gehäuseachse auf, aber weist gleichzeitig eine möglichst große Oberfläche zur sicheren Einbettung im Material des jeweils anderen Bauteils auf, bevorzugt im Material des Wandabschnitts des Gefäßes zur Aufnahme oder Durchleitung von Messfluid.

Bevorzugt erstreckt sich die Ankerstruktur, ununterbrochen oder unterbrochen, in Umfangsrichtung um die Gehäuseachse des fluidseitigen Gehäuseteils um eine um den Umfang des fluidseitigen Gehäuseteils möglichst gleichmäßig hohe Verbindungsfestigkeit zu gewährleisten.

Bis zur Anordnung des geräteseitigen Gehäuseteils am fluidseitigen Gehäuseteil kann der geräteseitige Gehäuseteil oder/und der fluidseitige Gehäuseteil jeweils durch eine Kappe vor äußeren Einflüssen, wie beispielsweise Verschmutzung usw., geschützt sein. Die Kappe kann mit denselben Sicherungsmitteln, wie etwa Formschlussmitteln, beispielsweise Gewinde oder eine Formation aus Vorsprung und abgewinkelter Kulissenbahn einer Bajonettverriegelung, am geräteseitigen oder/und fluidseitigen Gehäuseteil gehalten sein wie der jeweils andere Gehäuseteil. Alternativ oder zusätzlich kann die Kappe reibschlüssig an dem ihm zugeordneten Gehäuseteil gehalten sein.

Um die Sensoranordnung möglichst selbstständig, also mit möglichst wenig Peripheriegeräten einsetzbar bereitzustellen, kann im Geräteabschnitt des Sensorgehäuses eine Steuerungs- oder/und Signalverarbeitungselektronik angeordnet sein zur Steuerung der Strahlungsquelle oder/und der Detektorvorrichtung oder/und zur Auswertung von Erfassungssignalen der Detektorvorrichtung. Auch die oben genannten Signale des Strahlungsbaugruppe-Temperatursensors können von der Signalverarbeitungselektronik empfangen und zu einer Temperaturkompensation der Erfassungssignale der Detektorvorrichtung genutzt werden.

Da auch die Steuerungs- oder/und Signalverarbeitungselektronik Temperaturschwankungen und durch die Temperaturschwankungen bewirkten Performanzunterschieden unterliegen kann, ist gemäß einer vorteilhaften Weiterbildung im Geräteabschnitt ein Elektronik-Temperatursensor zur Erfassung einer Temperatur im Bereich der Steuerungs- oder/und Signalverarbeitungselektronik aufgenommen. Das Sensorsignal des Elektronik-Temperatursensors kann zur Temperaturkompensation verwendet werden, insbesondere durch die Steuerungs- oder/und Signalverarbeitungselektronik. Bevorzugt verwertet die Steuerungs- oder/und Signalverarbeitungselektronik sowohl Temperatursignale von dem Strahlungsbaugruppe-Temperatursensor, um Temperatureinflüsse auf die Strahlungsbaugruppe zu kompensieren, als auch Temperatursignale von dem Elektronik-Temperatursensor, um Temperatureinflüsse auf die Steuerungs- oder/und Signalverarbeitungselektronik zu kompensieren.

Im Geräteabschnitt des Sensorgehäuses kann ein für das Gasvolumen im Geräteabschnitt zugängliches Fangmaterial, auch als "Gettermaterial" bezeichnet, angeordnet sein, um Feuchtigkeit oder/und von der Steuerungs- oder/und Signalverarbeitungselektronik austretende Substanzen zu binden. Als ein derartiges Fangmaterial kann Silicagel, Molekularsieb, Zeolith oder/und andere hygroskopische Materialien, wie beispielweise Calciumchlorid (CaCl₂), Natriumhydroxid (NaOH), Kaliumhydroxid (KOH) oder Magnesiumperchlorat (Mg(ClO₄)₂ im Geräteabschnitt deponiert sein.

Zur besseren Wärmeableitung von von der Strahlungsquelle ausgehender Wärme ist bevorzugt die Wandstärke des Sensorgehäuses im Bereich der aufgenommenen Strahlungsquelle und der Detektorvorrichtung geringer als im Bereich der aufgenommenen Steuerungs- oder/und Signalverarbeitungselektronik. Die durch die geringere Wandstärke erzielte lokal geringere Masse des Sensorgehäuses erwärmt sich bei Wärmeübertrag von der Strahlungsquelle stärker und schneller als bei dickerer Wandstärke. Aufgrund der stärkeren Erwärmung kann der Abschnitt des Sensorgehäuses Wärme effektiver an seine Außenumgebung abgeben, sei es nun konduktiv oder/und konvektiv. Eine größere Wandstärke des Sensorgehäuses im Bereich der aufgenommenen Steuerungs- oder/und Signalverarbeitungselektronik bietet der Elektronik mechanischen Schutz vor äußeren Einflüssen und im oben genannten Falle einer bevorzugten metallischen Ausbildung des Sensorgehäuses auch eine hervorragende elektromagnetische Abschirmung.

Das Sensorgehäuse kann aus mehreren Gehäusebauteilen gefügt sein. Zur Erzielung eines stabilen Sensorgehäuses können Gehäusebauteile miteinander verschweißt sein, wobei die Fügestelle bevorzugt nach dem Fügevorgang oberflächenbearbeitet wird, etwa spanend bearbeitet, wie gedreht oder/und geschliffen und gegebenenfalls poliert, um das Sensorgehäuse möglichst passgenau in eine Fassung nahe des vorgesehenen Messortes einfügen zu können.

Die Barriereanordnung kann aus Diamant, Cadmiumtellurid, Thalliumbromidjodid, Silizium, Germanium, Zinkselenid, Cäsiumchlorid, Silberchlorid, Kalziumfluorid oder/und Kaliumbromid gebildet sein. Bevorzugt weist die Barriereanordnung eine Saphirglasscheibe auf oder ist eine solche. Saphirglas ist kostengünstig, ungiftig, weist eine verhältnismäßig hohe Wärmeleitfähigkeit auf und ist vor allem für Infrarotstrahlung transparent. Zur Abschirmung des Geräteabschnitts vor dem wenigstens einen Analyten-Bestandteil des Messfluids ist die Barriereanordnung bevorzugt stoffschlüssig mit dem Sensorgehäuse verbunden. Die Barriereanordnung, insbesondere als Saphirglasscheibe, kann mit dem Sensorgehäuse verklebt oder verkittet sein, und ist besonders bevorzugt durch eine Schmelzverbindung mit dem Sensorgehäuse verbunden. Die Schmelzverbindung wird durch eine wenigstens einmal thermisch erweichbare und wieder aushärtbare Substanz gebildet, beispielsweise Schmelzglas. Eine Verbindung der Barriereanordnung mit dem Sensorgehäuse kann jedoch auch durch eine thermisch aushärtbare Substanz, wie einen, insbesondere thermisch, aushärtbaren Duroplasten gebildet sein.

Die vorliegende Anmeldung betrifft außerdem eine Reflektoranordnung, wie sie oben beschrieben ist, insbesondere mit der Polymermatrix und den genannten etwaig vorhandenen weiteren Polymerschichten.

Die vorliegende Erfindung wird nachfolgend anhand der beiliegenden Zeichnungen näher erläutert werden. Es stellt dar:
- Fig. 1: eine grobschematische Draufsicht auf eine erfindungsgemäße Sensoranordnung mit Blickrichtung orthogonal zur Gehäuseachse des Sensorgehäuses,
- Fig. 2: eine grobschematische Schnittansicht durch das im bestimmungsgemäßen Messbetrieb von der Messumgebung benetzte freie Längsende der Sensoranordnung von Figur 1,
- Fig. 3: eine grobschematische Schnittansicht längs der zur Gehäuseachse G orthogonalen Schnittebene III-III in Figur 2,
- Fig. 4: eine grobschematische Detailvergrößerung des in Figur 2 mit IV bezeichneten Ausschnitts,
- Fig. 5: eine mögliche Ausführungsform einer Reflektoranordnung der Sensoranordnung von Figur 1,
- Fig. 6: eine bevorzugte Ausführungsform der Reflektoranordnung der Sensoranordnung von Figur 1,
- Fig. 7: die Reflektoranordnung von Figur 6 in einer grobschematischen Explosionsansicht,
- Fig. 8: eine grobschematische Explosionsansicht der im Inneren des Geräteabschnitts nahe der Barriereanordnung aufgenommenen Vorrichtungen,
- Fig. 9: eine grobschematische Teillängsschnittansicht durch den das Mess-Längsende enthaltenden Bereich der Sensoranordnung von Figur 1,
- Fig. 10: eine grobschematische Längsschnittansicht durch zwei unterschiedliche Ausführungsformen eines integral mit einer Wand eines Gefäßes zur Aufnahme oder Durchleitung von Messfluid ausgebildeten fluidseitigen Gehäuseteils einer erfindungsgemäßen Sensoranordnung, jeweils abgedeckt mit einer Schutzkappe,
- Fig. 11: eine grobschematische Längsschnittansicht durch die zwei unterschiedlichen Ausführungsformen des fluidseitigen Gehäuseteils von Figur 10, jeweils mit damit verbundenem geräteseitigen Gehäuseteil, und
- Fig. 12: eine grobschematische Längsschnittansicht durch zwei unterschiedliche alternative Ausführungsformen des integral mit einer Wand eines Gefäßes zur Aufnahme oder Durchleitung von Messfluid ausgebildeten fluidseitigen Gehäuseteils einer erfindungsgemäßen Sensoranordnung, jeweils mit damit verbundenem geräteseitigen Gehäuseteil.

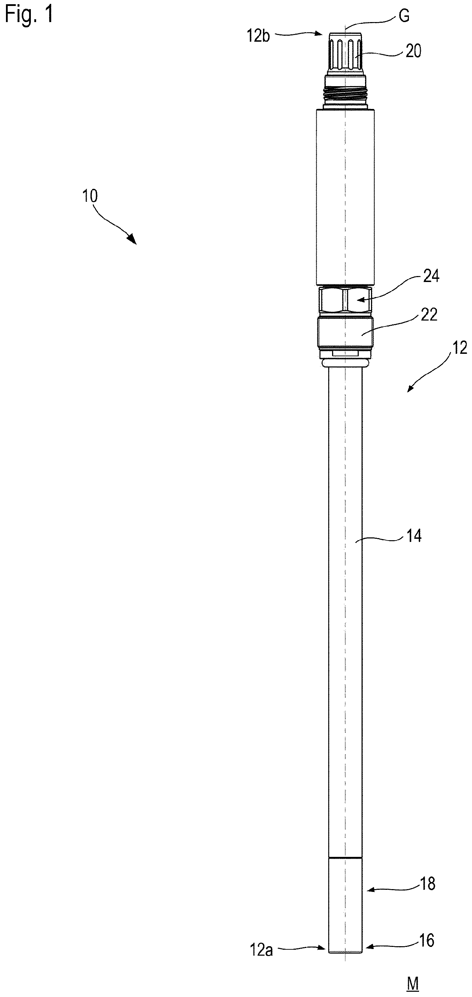

In Figur 1 ist eine erfindungsgemäße Ausführungsform der vorliegenden Anmeldung grobschematisch in einer Aufrissansicht dargestellt und allgemein mit 10 bezeichnet. Ein die Funktionsbauteile der Sensoranordnung einhausendes Sensorgehäuse 12 erstreckt sich längs einer Gehäuseachse G und weist eine grob rohrförmige Gestalt auf. Ein im vorliegenden Beispiel mehr als die Hälfte der Gesamtlänge der Sensoranordnung ausmachender Abschnitt des Sensorgehäuses 12 ist durch ein Rohrbauteil 14 gebildet. Das in Figur 1 untere freie Längsende 12a des Sensorgehäuses 12 weist als Mess-Längsende 12a einen nachfolgend noch im Detail erläuterten Probenabschnitt 16 auf, welcher im vorbestimmten Messbetrieb einer Messumgebung M ausgesetzt ist, die ein hinsichtlich eines Analyten-Bestandteils zu untersuchendes Messfluid enthält.

In einem vom Mess-Längsende 12a weg auf den Probenabschnitt 16 folgenden Geräteabschnitt 18 sind optische und elektronische Bauteile der Sensoranordnung 10 aufgenommen. Der Probenabschnitt 16 weist dagegen Bauteile auf, welche den wenigstens einen von der Sensoranordnung 10 erfassbaren Analyten-Bestandteil des Messfluids in einer für einen Erfassungsvorgang geeigneten Form bereitstellen.

An dem dem Mess-Längsende 12a axial bezüglich der Gehäuseachse G entgegengesetzten Anschluss-Längsende 12b weist das Sensorgehäuse 12 eine bevorzugt gasdichte Anschlussmanschette 20 zur Durchführung wenigstens einer signalübertragenden Leitung von außen in das Sensorgehäuse 12 hinein und von innen aus dem Sensorgehäuse 12 hinaus auf, um die Sensoranordnung 10 beispielsweise mit Peripheriegeräten zum Auslesen, Wiedergeben oder/und Dokumentieren von Erfassungssignalen und Erfassungsergebnissen zu verbinden.

Die Darstellung des Sensorgehäuses 12 in Figur 1 ist lediglich beispielhaft und das Sensorgehäuse 12 könnte jede beliebige andere Gestalt aufweisen. Allerdings ist die in Figur 1 gezeigte lange schlanke Gestalt vorteilhaft, um das Mess-Längsende 12a gewünschtenfalls mit Abstand von einer Gefäßwandung im Inneren eines das Messfluid enthaltenden Gefäßes anzuordnen. Zur Fixierung des Sensorgehäuses 12 an einer Gehäusewand oder an einer Fassung kann das Sensorgehäuse 12 einen Außengewindeabschnitt 22 aufweisen. Bevorzugt ist der Durchmesser des Rohrbauteils 14 kleiner als der Durchmesser des Außengewindeabschnitts 22, sodass das Rohrbauteil 14 durch einen mit dem Außengewindeabschnitt 22 zusammenpassenden Innengewindeabschnitt einer Fassung oder einer Gehäusewand hindurchgeführt und an seiner gewünschten Messposition positioniert werden kann.

Durch einen Werkzeugangriffsabschnitt 24 auf der vom Mess-Längsende 12a abgewandten Seite des Außengewindeabschnitts 22 kann die Sensoranordnung 10 sicher und mit der gewünschten Festigkeit mit dem oben genannten Innengewindeabschnitt verschraubt werden. Vorliegend umfasst der Werkzeugangriffsabschnitt 24 eine bekannte Außen-Sechskant-Formation für einen Maulschlüsselangriff.

Anstelle eines Außengewindes kann am Sensorgehäuse ein Vorsprung zur Einführung in eine L-förmige Ausnehmung an der Fassung oder an der Gehäusewand oder kann eine L-förmige Ausnehmung zur Wechselwirkung mit einem passenden Vorsprung an der Fassung bzw. an der Gehäusewand vorgesehen sein, um die Sensoranordnung 10 durch eine Bajonettverriegelung an der Fassung bzw. an der Gehäusewand axial festzulegen.

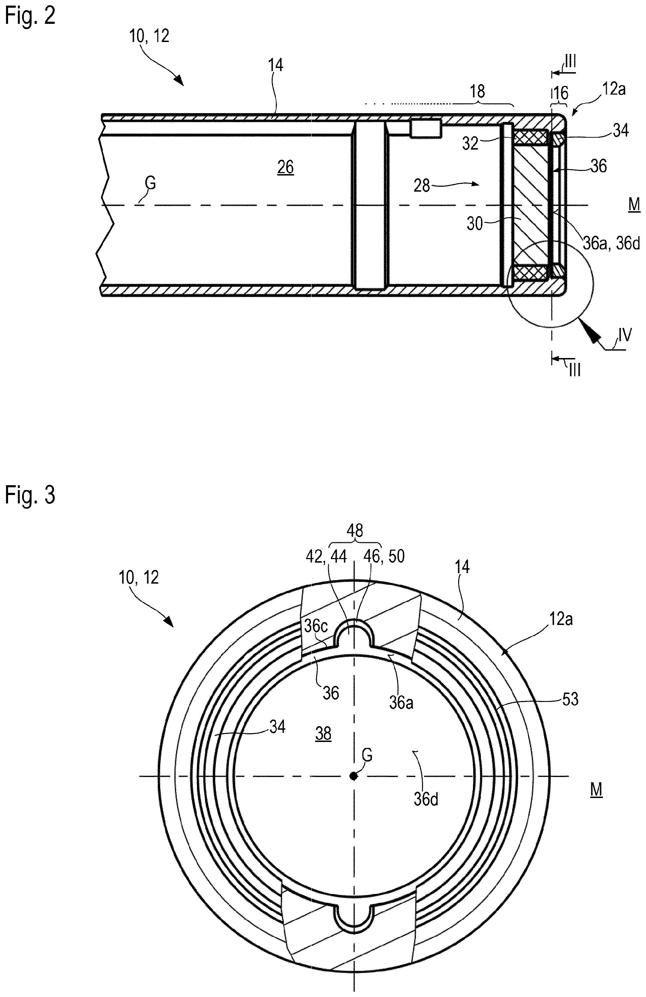

**In** Figur 2 ist grobschematisch eine Querschnittsansicht durch einen das Mess-Längsende 12a enthaltenden Endbereich der Sensoranordnung 10 gezeigt.

Der Probenabschnitt 16 reicht von einer im Inneren 26 des Sensorgehäuses 12 aufgenommenen Barriereanordnung 28 bis zum Mess-Längsende 12a der Sensoranordnung 10. Auf der dem Mess-Längsende 12a entgegengesetzten Seite der Barriereanordnung 28 beginnt der Geräteabschnitt 18, welcher sich von der Barriereanordnung 28 in Richtung zum Anschluss-Längsende 12b erstreckt. Der besseren Übersichtlichkeit halber ist das Innere 26 des Geräteabschnitts 18 des Sensorgehäuses 12 in Figur 2 leer dargestellt.

Die Barriereanordnung 28 umfasst eine zentral angeordnete und von der virtuellen Gehäuseachse G durchsetzte Saphirglasscheibe 30, welche durch einen thermoplastischen Kitt 32 stoffschlüssig mit dem Sensorgehäuse 12, insbesondere mit dem Rohrbauteil 14 verbunden ist. Der thermoplastische Kitt 32 kann beispielsweise Schmelzglas sein, welches nach dem Erstarren hochtemperaturfest die Saphirglasscheibe 30 mit dem Sensorgehäuse 12 verbindet. Alternativ kann der thermoplastische Kitt 32 ein hochtemperaturfester thermoplastischer oder duroplastischer Kunststoff sein, welcher Temperaturen von über 200 °C erträgt, ohne zu erweichen.

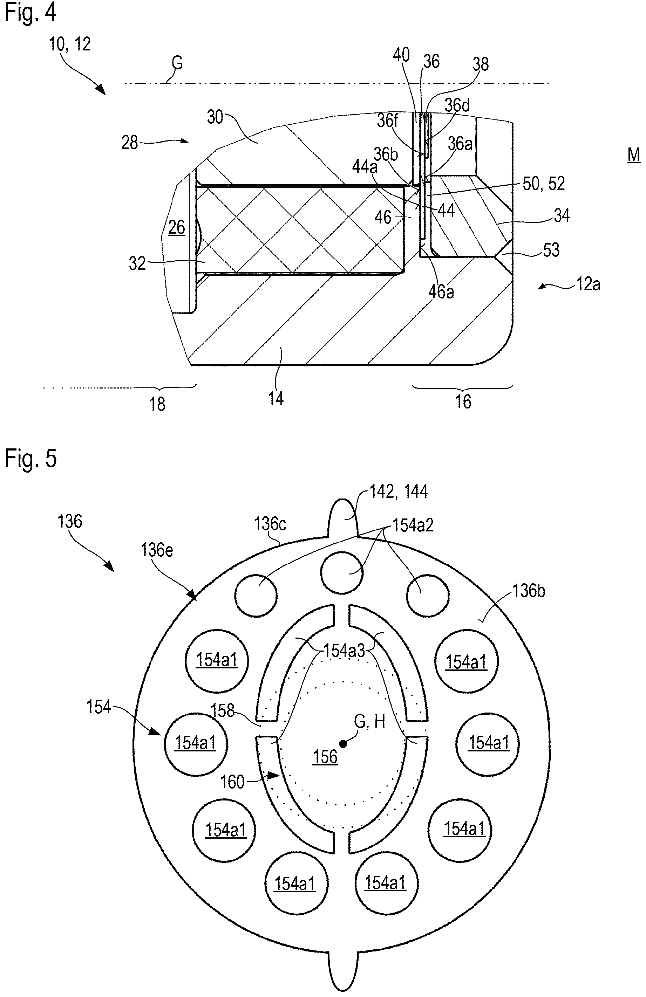

Im Probenabschnitt 16 ist radial innerhalb des Sensorgehäuses 12 ein Fixierring 34 angeordnet, welcher eine nachfolgend im Zusammenhang mit den Figuren 3 und 4 erläuterte Reflektoranordnung 36 am Sensorgehäuse 12 sichert.

Figur 3 zeigt eine Teilschnittansicht des Mess-Längsendes 12a bzw. des Probenabschnitts 16 längs der Schnittebene III-III von Figur 2 bei Betrachtung in axialer Richtung längs der Gehäuseachse G. Figur 4 zeigt die Lupenvergrößerung des Bereichs IV von Figur 2.

Die Reflektoranordnung 36 ist im vorliegenden Beispiel eine ebene scheibenförmige Reflektoranordnung aus nicht-rostendem Stahl, mit einer Dicke von bevorzugt 50 oder 100 µm. Die Reflektoranordnung 36 weist auf ihrer von der Barriereanordnung 28 weg weisenden Fluidseite 36a, auf die der Betrachter von Figur 3 blickt, eine Schutzschicht 38 aus einem Polymermaterial auf, welches für den wenigstens einen Analyten-Bestandteil durchlässig ist. Die Schutzschicht 38 ist in Gestalt einer Kreisscheibe aufgetragen. Sie hat eine Dicke von bevorzugt 40 µm und ist im dargestellten Beispiel aus Silikon, welches für CO₂ als dem bevorzugten Analyten-Bestandteil durchlässig ist.

Wie insbesondere in Figur 4 zu sehen ist, ist auf der der Fluidseite 36a mit der Schutzschicht 38 entgegengesetzten Signalseite 36b eine Polymermatrix 40 aufgetragen, welche bevorzugt ebenfalls aus Silikon hergestellt ist und eine Dicke von 160 µm aufweist. Die Polymermatrix 40 ist mit der ihr zugewandten Stirnseite der Saphirglasscheibe 30 durch Silikon verklebt. Das Silikon kann im unvernetzten Zustand aufgetragen und dann vernetzt werden. Die Polymermatrix 40 auf der Signalseite 36b ist ebenfalls kreisscheibenförmig gestaltet und erstreckt sich auf der Signalseite 36b über eine größere Fläche als die Schutzschicht 38 auf der Fluidseite 36a.

Wie vor allem in Figur 3 zu erkennen ist, weist die Reflektoranordnung 36 an ihrem Randbereich 36c einen einstückig mit der Reflektoranordnung 36 ausgebildeten Vorsprung 42 auf, welcher einen Anlageabschnitt 44 bildet, der sich mit einem einstückig mit dem Sensorgehäuse 12, insbesondere mit dem Rohrabschnitt 14 verbundenen Gegenanlageabschnitt 46 in Anlageeingriff befindet. Der Anlageeingriff verhindert körperlich eine Annäherung der Reflektoranordnung 36 an die Barriereanordnung 28 und den aus Sicht der Reflektoranordnung 36 dahinterliegenden Geräteabschnitt 18.

Der Anlageabschnitt 44 und der Gegenanlageabschnitt 46 bilden gemeinsam ein Abstandssicherungsmittel 48. Eine Anlagefläche 44a des Anlageabschnitts 44 bzw. des Vorsprungs 42 liegt an einer Gegenanlagefläche 46a des Gegenanlageabschnitts 46 an. Der Vorsprung 42 ist mit dem Material des Gegenanlageabschnitts 46 verklebt, verlötet oder bevorzugt verschweißt, etwa durch Laserschweißen, um die Reflektoranordnung 36 relativ zum Sensorgehäuse 12 eindeutig festzulegen. Im vorliegenden Ausführungsbeispiel ist die Festlegung stoffschlüssig. Somit ist der Vorsprung 42 bzw. der vom Vorsprung 42 gebildete Anlageabschnitt 44 auch Halteabschnitt im Sinne der Beschreibungseinleitung. Ebenso ist der Gegenanlageabschnitt 46, mit welchem der Anlageabschnitt 44 bzw. Halteabschnitt stoffschlüssig verbunden ist, Gegenhalteabschnitt im Sinne der Beschreibungseinleitung.

Der Anlageabschnitt 44 ist in einer Einsenkung 50 am Sensorgehäuse 12, insbesondere am Rohrabschnitt 14, aufgenommen, welche den Anlageabschnitt 44 in Umfangsrichtung um die Gehäuseachse G beiderseits einfasst, sodass die Einsenkung 50 gemeinsam mit dem Anlageabschnitt 44 eine Anordnung der Reflektoranordnung 36 am Sensorgehäuse 12 nur in zwei um 180° gedrehten definierten Relativwinkelstellungen um die Gehäuseachse G zulässt. Die stoffschlüssige Festlegung des Anlageabschnitts 44 am Sensorgehäuse 12 ist nicht nur eine Annäherungssicherung und eine Abhebesicherung der Reflektoranordnung 36 gegen eine Bewegung längs der Gehäuseachse G relativ zum Sensorgehäuse 12, sondern ist auch eine Verdrehsicherung der Reflektoranordnung 36 gegen eine Verdrehung der Reflektoranordnung 36 relativ zum Sensorgehäuse 12 um die Gehäuseachse G. Wegen des Formschlusseingriffs des Anlageabschnitts 44 mit der Einsenkung 50 ist jedoch bereits vor der endgültigen, im bevorzugten Beispiel stoffschlüssigen, Festlegung der Reflektoranordnung 36 am Sensorgehäuse 12 die Reflektoranordnung 36 nur in diskreten Winkelstellungen, vorliegend in zwei Winkelstellungen, am Sensorgehäuse 12 anordenbar.

Der Fixierring 34 definiert, wie in Figur 4 zu sehen ist, mit der Einsenkung 50 einen Spaltraum 52, in welchem der Vorsprung 42 bzw. Anlageabschnitt 44 der Reflektoranordnung 36 aufgenommen ist. Auf die von der Reflektoranordnung 36 weg weisende Seite der Schutzschicht 38 ist im betriebsbereiten Zustand eine Siegelschicht aus ebenfalls Silikon aufgetragen, welche den Spaltraum 52 ausfüllt. Die Siegelschicht weist bevorzugt eine Dicke von 10 µm auf.

Der bei Betrachtung der Fluidseite 36a längs der Gehäuseachse G vom Fixierring 34 und dem ihn umgebenden Abschnitt des Sensorgehäuses 12 nicht abgeschattete innere Bereich der Reflektoranordnung 36 ist der in der Beschreibungseinleitung bezeichnete vom Analyten-Bestandteil des Messfluids in der Messumgebung zugängliche Bereich der Reflektoranordnung 36.

Der bei Betrachtung der Signalseite 36b längs der Gehäuseachse G vom Gerätebereich 18 aus vom Gegenanlageabschnitt 46 nicht abgeschattete, radial innerhalb der vom Gegenanlageabschnitt 46 gebildeten Öffnung gelegene Bereich 36f der Signalseite 36b ist die in der Beschreibungseinleitung genannte gesamte für die Messstrahlung nicht abgeschattete Fläche der Signalseite 36b.

Der Fixierring 34 ist zunächst mit Presssitz im Sensorgehäuse 12 aufgenommen. Die insbesondere in den Figuren 3 und 4 erkennbare V-Nut 53 wird nach der Anordnung des Fixierrings 34 am Sensorgehäuse 12 zusätzlich zum bereits hergestellten Presssitz durch eine Schweißnaht aufgefüllt und dann die Oberfläche spanabhebend geglättet, beispielsweise durch Drehen oder/und Fräsen oder/und Schleifen oder/und Polieren.

In Figur 5 ist eine weniger bevorzugte Ausführungsform einer Reflektoranordnung 136 dargestellt. Gleiche und funktionsgleiche Bauteile wie in der Reflektoranordnung 36 der Figuren 2 bis 4 sind in Figur 5 mit gleichen Bezugszeichen versehen, jedoch erhöht um die Zahl 100. Die Ausführungsform der Reflektoranordnung 136 wird nur insofern erläutert, als sie sich von der bisher beschriebenen Reflektoranordnung 36 der Figuren 2 bis 4 unterscheidet. Ansonsten wird zur Erläuterung der Reflektoranordnung 136 auf die obige Beschreibung der Reflektoranordnung 36 verwiesen.

Figur 5 zeigt die Reflektoranordnung 136 ohne Polymermatrix und Schutzschicht, also alleine jenes Bauteil, welches auf der dem Betrachter von Figur 5 zugewandten Signalseite 136b die auf es eintreffende Messstrahlung reflektiert.

Die Reflektoranordnung 136 weist in ihrem reflektierenden Hauptbereich 136e, von welchem die Vorsprünge 142 als Anlageabschnitt der 144 abstehen, Durchgänge 154 auf, welche die Reflektoranordnung 136 in der zur Zeichenebene von Figur 5 orthogonalen Dickenrichtung vollständig durchsetzen. Die Durchgänge 154 reichen somit von der in Figur 5 dem Betrachter zugewandten Signalseite 136b bis zu der vom Betrachter der Figur 5 abgewandten Fluidseite 136a.

Die Durchgänge 154 dienen dazu, die Reflektoranordnung 136 für den von der Sensoranordnung 10 zu erfassenden Analyten-Bestandteil durchlässig zu machen, sodass dieser von der Messumgebung M durch die für den Analyten-Bestandteil durchlässigen Schichten: Siegelschicht und Schutzschicht 38, durch die Durchgänge 154 hindurch in die Polymermatrix 40 diffundieren kann. Dann, wenn die Messumgebung M kein Messfluid mehr enthält oder das Messfluid keinen Analyten-Bestandteil mehr enthält, diffundiert der Analyten-Bestandteil aus der Polymermatrix 40 zurück in die Messumgebung M. Ein Konzentrationsunterschied des Analyten-Bestandteils zwischen dessen Anteil am Messfluid in der Messumgebung M und dessen Anteil in der Polymermatrix 40 ist Treiber des Diffusionsvorgangs, welcher dann beendet ist, wenn zwischen der Konzentration an Analyten-Bestandteil in der Polymermatrix 40 und der Konzentration an Analyten-Bestandteil in der Messumgebung M Gleichgewicht herrscht.

Die Durchgänge 154 an der Reflektoranordnung 136 weisen unterschiedliche Gestalten auf und sind überdies über die Fläche der Reflektoranordnung 136, genauer über deren Hauptbereich 136e, heterogen verteilt angeordnet.

So weist die Reflektoranordnung 136 eine Mehrzahl, im vorliegenden Beispiel acht, von kreisrunden Durchgängen 154a1 mit größerem Durchmesser auf und weist eine Mehrzahl, im vorliegenden Beispiel drei, von kreisrunden Durchgängen 154a2 mit kleinerem Durchmesser auf. Diese kreisrunden Durchgänge 154a1 und 154a2 sind im gezeigten Beispiel in der Nähe des Randbereichs 136c der Reflektoranordnung 136, dem Randbereich 136c in etwa folgend angeordnet.

Die Durchgänge 154a1 mit größerem Durchmesser und daher größerer Durchgangsquerschnittsfläche können einen Durchmesser von beispielsweise 0,9 bis 1,2 mm aufweisen. Die Durchgänge 154a2 mit kleinerem Durchmesser und daher kleinerer Durchgangsquerschnittsfläche können einen Durchmesser von beispielsweise 0,5 bis 0,8 mm aufweisen.

**In** kürzerer Distanz von der Gehäuseachse G als die kreisrunden Durchgänge 154a1 und 154a2 befinden sich beispielhaft vier schlitzförmige Durchgänge 154a3 mit krummlinigem Verlauf. Beispielhaft sind die vier schlitzförmigen Durchgänge 154a3 derart angeordnet, dass ihre Schlitzfläche einer Ellipse folgt. Die schlitzförmigen Durchgänge 154a3 müssen nicht krummlinig sein oder können anders als in Figur 5 dargestellt gekrümmt sein.

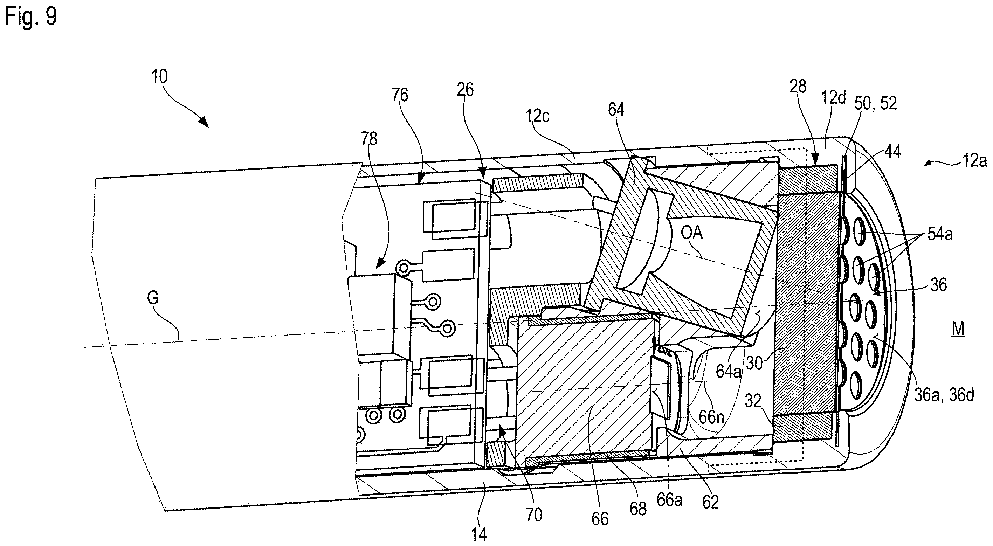

**In** einem zentralen Bereich 156, dessen Mittelpunkt sowohl der Mittelpunkt des kreisförmigen Hauptbereichs 136e als auch des nicht für Messstrahlung abgeschatteten Bereichs ist als auch der Auftreffpunkt H einer optischen Achse OA der weiter unten erläuterten Strahlungsquelle 64 (s. Fig. 9) ist, ist kein Durchgang 154 angeordnet. In dem zentralen Bereich 156 sind die Reflektoranordnung 136 und ihre die Messstrahlung reflektierende Signalseite 136b massiv ausgebildet, um eine möglichst große Reflexionsfläche dort bereitzustellen, wo ein Großteil der von der Strahlungsquelle 64 abgestrahlten Messstrahlung auf die Reflektoranordnung 136 auftrifft.

Der Radius des Bereichs 156 um die Gehäuseachse G bzw. den Auftreffpunkt H beträgt etwas weniger als ein Drittel des Radius des für Messstrahlung nicht abgeschatteten Bereichs der Reflektoranordnung 136, sodass der Bereich 156 etwas mehr als 10 % der Fläche des für Messstrahlung nicht abgeschatteten Bereichs einnimmt. In diesem zentralen Bereich 156 ist die Reflektoranordnung 186 frei von Durchgängen 154.

Der punktiert angedeutete Kreis 158 bildet mit dem Rand des Bereichs 156 einen Ringraum 160, welcher die gleiche Fläche aufweist wie der Bereich 156. Wie in Figur 5 leicht zu erkennen ist, enthält der Ringraum 160 Anteile der Durchgänge 154a3, sodass der Flächenanteil an Durchgangsquerschnittsflächen im Ringraum 160 um 100 % größer ist als im durchgangsfreien zentralen Bereich 156.

Im Ausführungsbeispiel von Figur 5 liegt also die gesamte an der Reflektoranordnung 136 realisierte Durchschnittsquerschnittsfläche außerhalb des innersten zentralen Bereichs 156, dessen Flächenanteil an dem für Messstrahlung nicht abgeschatteten Bereich der Reflektoranordnung 136 wenigstens 10 % beträgt.

Durch diese Ausbildung wird sichergestellt, dass einerseits ausreichend Durchgangsquerschnittsfläche an der Reflektoranordnung 136 vorgesehen ist, um bei Änderung der Konzentration des Analyten-Bestandteils im Messfluid in der Messumgebung M eine ausreichend schnelle Änderung der Konzentration des Analyten-Bestandteils auch in der von der Messstrahlung durchstrahlten Polymermatrix 40 hin zu einem neuen Gleichgewichtszustand zu erreichen, und um gleichzeitig eine ausreichend hohe Ausbeute an reflektierter Messstrahlung zu erhalten, die von der Detektorvorrichtung 66 (s. Fig. 9) im Geräteabschnitt 18 erfasst werden kann.

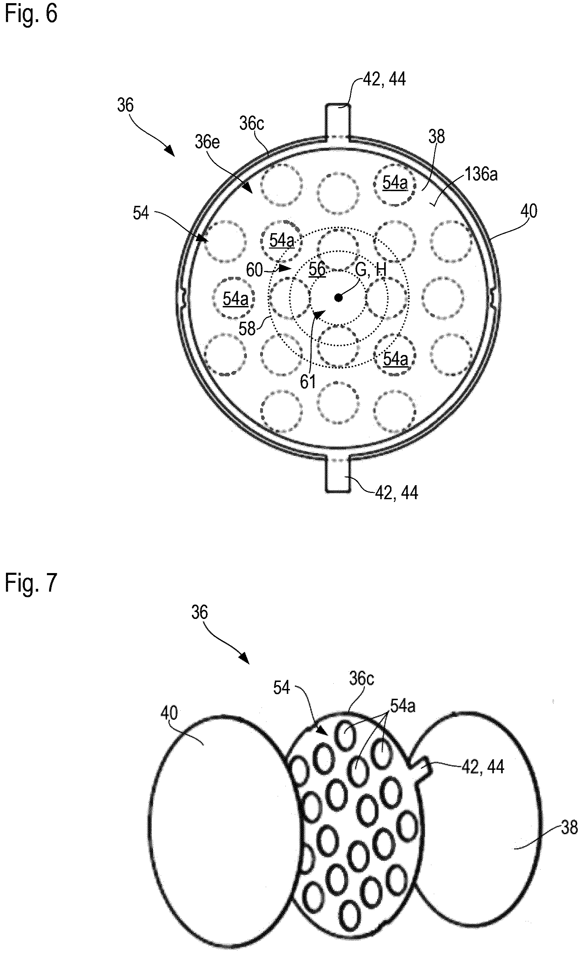

In Figur 6 ist die Ausführungsform der Reflektoranordnung 36 der Figuren 2 bis 4 dargestellt, mit Ausnahme der Vorsprünge 42, welche an Stelle einer abgerundeten Gestalt der Figur 3 in Figur 6 eine rechteckige Gestalt aufweisen. Die Einsenkung 50 ist bei Verwendung der Reflektoranordnung 36 mit eckigen Vorsprüngen 42 entsprechend komplementär ausgestaltet und weist ebenfalls eine eckige polyedrische Berandung auf. **In** Figur 6 sind gleiche und funktionsgleiche Bauteile und Bauteilabschnitte wie in Figur 5 mit gleichen Bezugszeichen versehen, jedoch verringert um die Zahl 100. Die Erläuterung der Ausführungsform von Figur 5 gilt auch für die in Figur 6 gezeigte Ausführungsform, soweit nachfolgend nichts anderes dargelegt ist.

Der Betrachter der Figur 6 blickt auf die Fluidseite 36a der Reflektoranordnung 36, auf welcher die Schutzschicht 38 aufgetragen ist. Die auf der entgegengesetzten Signalseite angeordnete Polymermatrix 40 ragt radial geringfügig über den Hauptbereich 36e der Reflektoranordnung 36 hinaus.

In der Ausführungsform von Figur 6 weist der Hauptbereich 36e der Reflektoranordnung 36 nur eine Art von Durchgängen 54 auf, nämlich kreisförmige Durchgänge 54a, welche alle den gleichen Durchmesser aufweisen. Der Durchmesser beträgt etwa 0,8 bis 1,1 mm, vorliegend bevorzugt 1,0 mm. Die kreisrunden Durchgänge 54a sind jedoch in der Fläche des Hauptbereichs 36e bzw. in dem für Messstrahlung nicht abgeschatteten Bereich 36f der Reflektoranordnung 36 heterogen verteilt. Es existiert ein zentraler Bereich 56, welcher etwas mehr als 10 % der Gesamtfläche des für Messstrahlung nicht abgeschatteten Bereichs 36f einnimmt. In diesem zentralen Bereich 56, dessen Mittelpunkt wiederum die Gehäuseachse G und der Auftreffpunkt H der optischen Achse der Strahlungsquelle sind, befindet sich etwas weniger als die Durchgangsquerschnittsfläche von zwei kreisrunden Durchgängen 54a. Es werden insgesamt vier kreisrunde Durchgänge 54a vom Rand des zentralen Bereich 56 geschnitten, wobei jeweils weniger als die Hälfte eines der geschnittenen kreisrunden Durchgänge 54a innerhalb des zentralen Bereichs 56 gelegen ist.

Der den zentralen Bereich 56 konzentrisch umgebende flächengleiche Ringbereich 60, welcher also ebenfalls etwas mehr als 10 % der Gesamtfläche des für Messstrahlung nicht abgeschatteten Bereichs 36f einnimmt, enthält dagegen etwas weniger als die Durchgangsquerschnittsfläche von vier kreisrunden Durchgängen 54a. Sowohl der innere als auch der äußere Rand des Ringbereichs 60 schneidet jeweils vier kreisrunde Durchgänge 54a, deren innerhalb des Ringbereichs 60 gelegene Teilflächen sich zu den etwas weniger als vier Durchgangsquerschnittsflächen der kreisrunden Durchgänge 54a addieren. Somit weist der zentrale Bereich 56 etwa 50 % weniger Anteil an Durchgangsquerschnittsfläche an seiner gesamten Flächenerstreckung auf als der ihn umgebende konzentrische Ringbereich 60.

Wie Figur 6 außerdem zeigt, existiert auch an der Reflektoranordnung 36 ein im Bereich 56 gelegener zentraler durchgangsfreier Bereich 61, dessen Mittelpunkt die Gehäuseachse G bzw. der Auftreffpunkt H der optischen Achse der Strahlungsquelle ist, und dessen Fläche wenigstens 30 % größer als die durchschnittliche Durchgangsquerschnittsfläche eines Durchgangs 54a der Reflektoranordnung 36 ist.

Figur 7 zeigt eine Explosionsansicht der Reflektoranordnung 36 von Figur 6, also mit der dünneren und durchmesserkleineren Schutzschicht 38 sowie mit der dickeren und durchmessergrößeren Polymermatrix 40 jeweils von der Reflektoranordnung 36 entfernt. Die kreisrunden Durchgänge 54a sind mit Material der Polymermatrix 40 oder/und der Schutzschicht 38 ausgefüllt.

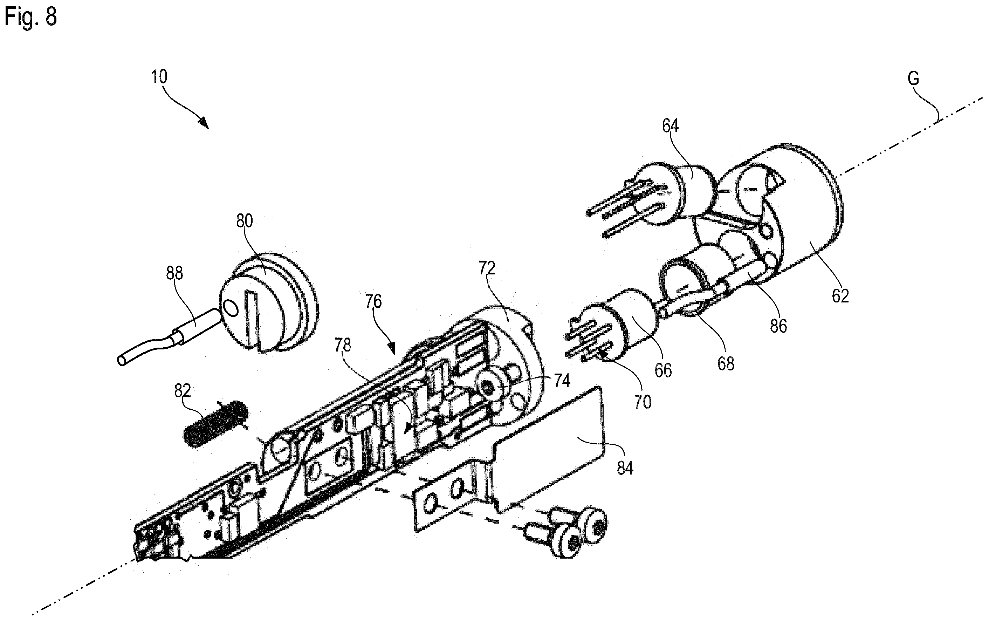

In Figur 8 ist der der Barriereanordnung 28 nächstgelegene Teil der im Geräteabschnitt 18 im Inneren des Sensorgehäuses 12 angeordneten Bauteile dargestellt.

Der in Figur 8 nicht dargestellten Barriereanordnung am nächsten gelegen ist eine Halterung 62, vorzugsweise aus Metall, in welcher die Strahlungsquelle 64 und die Detektorvorrichtung 66 zur jenseits der Halterung 62 gelegenen Barriereanordnung 28 hin weisend angeordnet sind.

Die Strahlungsquelle 64 kann beispielsweise eine im Infrarot-Wellenlängenbereich abstrahlende LED sein. Die Detektorvorrichtung 66 kann ein Infrarot-sensitives CCD-Feld 66a (s. Fig. 9) aufweisen.

Zur thermischen Isolierung der Detektorvorrichtung 66 gegenüber der auch als Wärmequelle wirkenden Strahlungsquelle 64 ist die Detektorvorrichtung 66 von einer Hülle 68 aus Kunststoff, insbesondere aus PEEK, umgeben. Die Hülle 68 ist zylindrisch oder konisch bzw. kegelstumpfförmig ausgebildet, und ist zu beiden axialen Seiten offen, sodass von der Reflektoranordnung 36 reflektierte Messstrahlung auf die Vorderseite der Detektorvorrichtung 66 einstrahlen kann und sodass auf der Rückseite der Detektorvorrichtung 66 deren Erfassungssignale über Leitungen 70 von der Detektorvorrichtung 66 weg geleitet werden können.

Auf der von der Barriereanordnung 28 abgewandten Seite der Halterung 62 ist ein Sitzbauteil 72 angeordnet, dessen längs der Gehäuseachse G zur Halterung hin weisende Stirnfläche wenigstens abschnittsweise komplementär zu der zum Sitzbauteil 72 hin weisenden Rückseite der Halterung 62 ausgebildet ist, durch welche hindurch die Strahlungsquelle 64 und die Detektorvorrichtung 66 in die Halterung eingeführt werden. Die komplementäre Ausbildung dieser Flächen stellt sicher, dass die Halterung 62 nur in einer bestimmten Relativstellung am Sitzbauteil 62 angeordnet werden kann. Die Halterung 62 kann über Schrauben 74 am Sitzbauteil 72 gesichert sein.

Auf der von der Halterung 62 abgewandten Seite des Sitzbauteils 72 steht eine Platine 76 ab, auf welcher eine Steuerung- und Signalverarbeitungselektronik 78 zur Steuerung der Strahlungsquelle 74 und der Detektorvorrichtung 66 sowie zur Auswertung oder Teilauswertung von Erfassungssignalen der Detektorvorrichtung 66 angeordnet ist.

Die Platine 76 ist über ein weiteres Sitzbauteil 80 an dem in Figur 8 nicht dargestellten Sensorgehäuse 12 stabilisiert und mittels einer Druckfeder 82 zur Barriereanordnung 28 hin vorgespannt.

Ein Teil der Steuerungs- oder/und Signalverarbeitungselektronik 78 kann durch ein Schutzblech 84 vor Wärmeeinwirkung geschützt sein.

Die Halterung 62 trägt einen Strahlungsbaugruppe-Temperatursensor 86, welcher eine Temperatur der Sensoranordnung 10 im Bereich der Halterung 62 mit der Strahlungsbaugruppe, umfassend die Strahlungsquelle 74 und die Detektorvorrichtung 66, erfasst und an die Steuerungs- oder/und Signalverarbeitungselektronik 78 überträgt.

Das weitere Sitzbauteil 80 nimmt einen Elektronik-Temperatursensor 88 auf, welcher eine Temperatur der Sensoranordnung 10 im Bereich der Steuerungs- oder/und Signalverarbeitungselektronik erfasst und an diese Elektronik ausgibt. Somit kann die Steuerungs- oder/und Signalverarbeitungselektronik 78 die von der Detektorvorrichtung 66 erhaltenen Erfassungssignale sowohl hinsichtlich der im Bereich der Detektorvorrichtung 66 herrschenden Temperatur als auch hinsichtlich der an der Steuerungs- oder/und Signalverarbeitungselektronik 78 selbst herrschenden Temperatur kompensieren und so ein besonders genaues Erfassungssignal ausgeben.

**In** Figur 9 ist die Sensoranordnung 10 im Teilschnitt im Bereich ihres Mess-Längsendes 12a dargestellt. Anhand der Bezugszeichen in Figur 9 sind die dort dargestellten, oben bereits erläuterten Bauteile ohne weiteres zu identifizieren.

In Figur 9 ist zu erkennen, dass die Strahlungsquelle 64 mit ihrer optischen Achse OA relativ zur Gehäuseachse G geneigt dargestellt ist. Außerdem ist die Strahlungsaustrittsfläche 64a der Strahlungsquelle 64 näher an der Barriereanordnung 28 angeordnet als eine strahlungssensitive Detektorfläche 66a der Detektorvorrichtung 66. Die Strahlungsaustrittsfläche 64a kann sogar das Saphirglas 30 der Barriereanordnung 28 berühren.

Eine Normale 66n auf die Detektorfläche 66a verläuft im dargestellten Beispiel parallel zur Gehäuseachse G. Die optische Achse OA Strahlungsquelle 64 ist somit bezüglich der Gehäuseachse G stärker geneigt als die Normale 66n auf die Detektorfläche 66a.

Die optische Achse OA der Strahlungsquelle 64 trifft in dem in Figur 6 bezeichneten zentralen Bereich 56, vorzugsweise genau in dessen Mitte, auf die reflektierende Signalseite 36b der Reflektoranordnung 36 auf. Von dort wird ein erheblicher Teil der einstrahlenden Messstrahlung zur Detektorfläche 66a reflektiert. Der Analyten-Bestandteil, vorzugsweise CO₂, in der zwischen dem Saphirglas 30 und der Reflektoranordnung 36 angeordneten Polymermatrix 40 absorbiert die von der Strahlungsquelle 64 ausgesendete Messstrahlung abhängig von seiner Konzentration in der Polymermatrix 40. Um das Ausmaß an Absorption der Messstrahlung feststellen zu können, sendet die Strahlungsquelle 64 auch eine Referenzstrahlung mit anderer Wellenlänge als jene der Messstrahlung aus, welche von dem Analyten-Bestandteil in der Polymermatrix 40 nicht absorbiert wird und auch sonst unbeeinflusst bleibt. Aus dem Verhältnis beispielsweise der Intensitäten der von der Detektorvorrichtung 66 erfassten reflektierten Messstrahlung einerseits und der erfassten reflektierten Referenzstrahlung andererseits kann die Steuerungs- oder/und Signalverarbeitungselektronik 78 das Ausmaß an Absorption in der Polymermatrix 40 und davon ausgehend die Konzentration an Analyten-Bestandteil in der Polymermatrix 40 ermitteln.

Die Wandstärke des Rohrbauteils 14 kann in dem in Figur 9 gezeigten, der Barriereanordnung 28 nächstgelegenen Teil des Geräteabschnitts 18 dünner ausgebildet sein als in einem weiter von der Barriereanordnung 28 entfernt gelegenen Abschnitt des Rohrbauteils 14.

Strichliniert ist eine Trennfläche in Figur 9 dargestellt, welche das in Figur 9 dargestellte Mess-Längsende 12a der Sensorvorrichtung 10 in einen geräteseitigen Gehäuseteil 12c und einen fluidseitigen Gehäuseteil 12d unterteilt, wobei der fluidseitige Gehäuseteil 12d lösbar am geräteseitigen Gehäuseteil 12c angeordnet ist, etwa aufgesteckt oder aufgeschraubt ist. Der Probenabschnitt 16 ist dann vollständig Teil des fluidseitigen Gehäuseteils 12d. Die geteilte Barriereanordnung 28 schützt mit ihrem fest am geräteseitigen Gehäuseteil 12c angeordneten Abschnitt den Innenraum 26 der Sensoranordnung 10 weiterhin vor äußeren Einflüssen. Der fluidseitige Gehäuseteil 12d kann dann am Ende seiner Gebrauchsdauer ausgetauscht werden, während die übrige Sensoranordnung 10 weiter verwendet werden kann.

In Figur 9 ist die Stirnfläche des Mess-Längsendes 12a der Sensoranordnung 10 fertig bearbeitet gezeigt, d. h. mit schweißtechnisch mit dem Rohrbauteil 14 verbundenen Fixierring, wobei die Schweißnaht planpoliert ist.

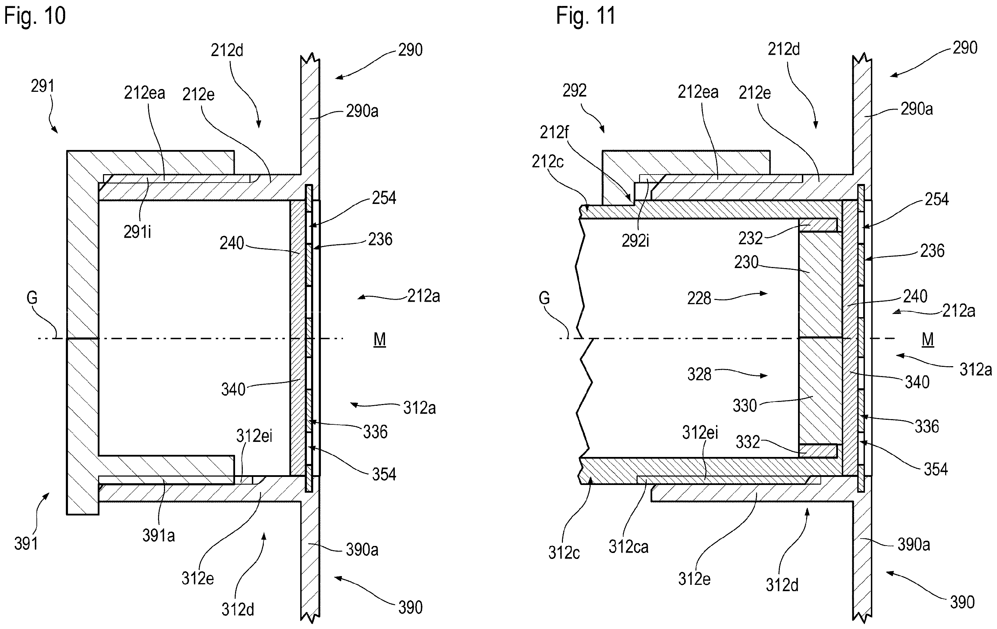

In Figur 10 sind zwei geringfügig unterschiedliche Ausführungsformen eines fluidseitigen Gehäuseteils 212d, oben, und 312d, unten, in einem grobschematischen Längsschnitt dargestellt. Gleiche und funktionsgleiche Bauteile und Bauteilabschnitte wie in den vorhergehenden Ausführungsformen sind in der oberen Darstellungshälfte mit gleichen Bezugszeichen versehen, jedoch im Zahlenraum von 200 bis 299. Gleiche und funktionsgleiche Bauteile und Bauteilabschnitte wie in den vorhergehenden Ausführungsformen sind in der unteren Darstellungshälfte mit gleichen Bezugszeichen versehen, jedoch im Zahlenraum von 300 bis 399. Die Ausführungsformen von Figur 10 werden nachfolgend nur insofern beschrieben werden, als sie sich von der vorhergehenden Beschreibung unterscheiden. Die vorhergehende Beschreibung dient ansonsten auch der Erläuterung der Ausführungsformen der Figur 10.

Der fluidseitige Gehäuseteil 212d ist im dargestellten Ausführungsbeispiel aus Metall, insbesondere aus nicht-rostendem Stahl, oder aus Kunststoff hergestellt, und zwar einstückig mit einer Wand 290a eines Gehäuses 290 zur Aufnahme oder Durchleitung von Messfluid, welches mit der erfindungsgemäßen Sensoranordnung messtechnisch erfasst werden soll. Alternativ kann der fluidseitige Gehäuseteil 212d gesondert von der Wand 290a hergestellt und mit dieser stoffschlüssig verbunden sein, bevorzugt durch Schweißen.

Der fluidseitige Gehäuseteil 212d umfasst in den dargestellten Ausführungsformen am Mess-Längsende 212a die Reflektoranordnung 236 und die Polymermatrix 240, gewünschtenfalls auch die in Fig. 10 nicht dargestellte Schutzschicht, bevorzugt gemäß der obigen Beschreibung. Der fluidseitige Gehäuseteil 212d umfasst jedoch kein Teil der Barriereanordnung, die vollständig am geräteseitigen Gehäuseteil angeordnet ist.

Der fluidseitige Gehäuseteil 212d weist einen vom Mess-Längsende 212a weg, hin zu einem noch anzuordnenden geräteseitigen Gehäuseteil 212c, vorstehenden Hülsenabschnitt 212e auf.

In der in Figur 10 in der oberen Hälfte der Darstellung gezeigten Ausführungsformen weist der Hülsenabschnitt 212e ein Außengewinde 212ea auf, auf welche eine Schutzkappe 291 mit Innengewinde 291i aufgeschraubt ist.

Alternativ, wie in der unteren Hälfte der Darstellung von Figur 10 gezeigt, kann der Hülsenabschnitt 312e ein Innengewinde 312ei aufweisen, mit welchem eine entsprechend mit Außengewinde versehene Schutzkappe 391 verschraubt ist. Die den Hülsenabschnitt 212e bezogen auf die Gehäuseachse G im Bereich des fluidseitigen Gehäuseteils 212d radial außen umgreifende Schutzkappe 291 schützt den Hülsenabschnitt 212e und den fluidseitigen Gehäuseteil 212d besser gegen beispielsweise Schmutzeintritt in den Innenbereich des Hülsenabschnitts 212e als dies am Hülsenabschnitt 312e mit Innengewinde 312ei der Fall ist, wo sich im ungünstigsten Fall Schmutz im Spalt zwischen der axialen Stirnfläche an dem der Messumgebung M fernen Längsende und der Schutzkappe 391 ansammeln kann. Dafür beansprucht die in Figur 10 untere Ausführungsform weniger Bauraum, da sich Festlegeabschnitte der Schutzkappe 391, wie etwa das Innengewinde 391i und die es tragende Kappenhülse, innerhalb des Hülsenabschnitts 312e befinden.

Schraubachse der Schutzkappe 291 bzw. 391 ist in beiden Fällen die Gehäuseachse G im Bereich des fluidseitigen Gehäuseteils 212d bzw. 312d.

In Figur 11 sind dieselben beiden Ausführungsformen eines fluidseitigen Gehäuseteils 212d bzw. 312d wie in Figur 10 dargestellt. Allerdings ist nun die jeweilige Schutzkappe 291 bzw. 391 entfernt. Statt der Schutzkappe 291 bzw. 391 ist nun der geräteseitige Gehäuseteil 212c in der oberen Darstellungshälfte bzw. 312c in der unteren Darstellungshälfte mit dem fluidseitigen Gehäuseteil 212d bzw. 312d verbunden, genauer verschraubt. Schraubachse ist in beiden Fällen die Gehäuseachse G.

Die Darstellung des Innenbereichs der geräteseitigen Gehäuseteile 212c und 312c ist in Figur 11 der besseren Übersichtlichkeit halber weggelassen. Diese entspricht im Wesentlichen der Darstellung von Figur 9.

Wie oben bereits angedeutet, ist in den Ausführungsbeispielen der Figur 11 die gesamte Barriereanordnung 228 bzw. 328 am geräteseitigen Gehäuseteil 212c bzw. 312c in der oben beschriebenen Art und Weise angeordnet. Mit der Verbindung des geräteseitigen Gehäuseteils 212c bzw. 312c mit dem zugeordneten fluidseitigen Gehäuseteil 212d bzw. 312d wird die Barriereanordnung 228 bzw. 328 an die Polymermatrix 240 bzw. 340 zur Anlage an dieser herangeführt.

Der in der oberen Darstellungshälfte von Figur 11 gezeigte geräteseitige Gehäuseteil 212c weist zu seiner Verbindung mit dem fluidseitigen Gehäuseteil 212d eine Überwurfmutter 292 mit Innengewinde 292i auf. Die Überwurfmutter 292 liegt an einem Absatz 212f des geräteseitigen Gehäuseteils 212c an und kann dadurch im Schraubeingriff mit dem Außengewinde 212ea des Hülsenabschnitts 212e eine axiale Kraft in Richtung zur Messumgebung M bzw. zum Mess-Längsende 212a hin auf den geräteseitigen Gehäuseteil 212c ausüben.

Bei vorteilhaft gewählter Spielpassung zwischen der Außenfläche des geräteseitigen Gehäuseteils 212c und der Innenseite des Hülsenabschnitts 212e kann der Schraubeingriff zwischen der Überwurfmutter 292 und dem Hülsenabschnitts 212e gelöst werden, ohne dass dadurch zwingend der geräteseitige Gehäuseteil 212c vom fluidseitigen Gehäuseteil 212d entfernt wird. Der geräteseitige Gehäuseteil 212c kann auch nach Lösen des Schraubeingriffs zwischen der Überwurfmutter 292 und dem Hülsenabschnitts 212e reibschlüssig am fluidseitigen Gehäuseteil 212d gehalten sein, sodass er manuell durch den Benutzer vom fluidseitigen Gehäuseteils 212d entfernt werden muss. Da der geräteseitige Gehäuseteil 212c relativ zur Überwurfmutter 292 relativ drehbar sein muss, kann der geräteseitige Gehäuseteil 212c in einer beliebigen Drehstellung relativ zum fluidseitigen Gehäuseteil 212d angeordnet werden.

Bei der Ausführungsform des geräteseitigen Gehäuseteils 312c der unteren Darstellungshälfte von Figur 11 weist der geräteseitige Gehäuseteil 312c ein Außengewinde 312ca auf, mit welchem der geräteseitige Gehäuseteil 312c in das Innengewinde 312ei des Hülsenabschnitts 312e des fluidseitigen Gehäuseteils 312d eingedreht werden kann. Im Gegensatz zur Ausführungsform oberen Darstellungshälfte von Figur 11 ist die Relativstellung zwischen dem geräteseitigen Gehäuseteil 312c und dem fluidseitigen Gehäuseteil 312d vom Schraubeingriff der beiden Gehäuseteile miteinander abhängig. Somit ist die Relativdrehstellung zwischen dem geräteseitigen Gehäuseteil 312c und dem fluidseitigen Gehäuseteil 312d nicht frei wählbar.

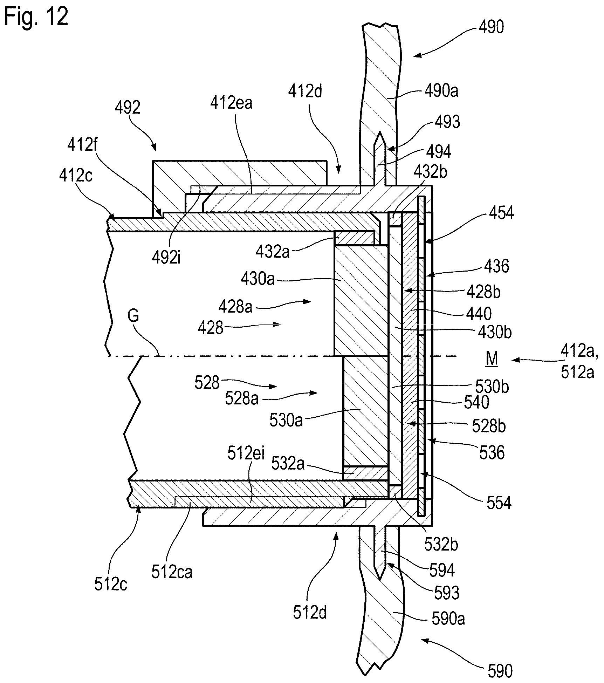

In Figur 12 sind zwei geringfügig unterschiedliche Ausführungsformen eines fluidseitigen Gehäuseteils 412d, oben, und 512d, unten, in einem grobschematischen Längsschnitt dargestellt. Gleiche und funktionsgleiche Bauteile und Bauteilabschnitte wie in den vorhergehenden Ausführungsformen sind in der oberen Darstellungshälfte mit gleichen Bezugszeichen versehen, jedoch im Zahlenraum von 400 bis 499. Gleiche und funktionsgleiche Bauteile und Bauteilabschnitte wie in den vorhergehenden Ausführungsformen sind in der unteren Darstellungshälfte mit gleichen Bezugszeichen versehen, jedoch im Zahlenraum von 500 bis 599. Die Ausführungsformen von Figur 12 werden nachfolgend nur insofern beschrieben werden, als sie sich von der vorhergehenden Beschreibung unterscheiden. Die vorhergehende Beschreibung dient ansonsten auch der Erläuterung der Ausführungsformen der Figur 12.

Ein erster Unterschied der beiden Ausführungsformen von Figur 12 zu den vorhergehenden Ausdrucksformen von Figur 11 liegt darin, dass die Barriereanordnung 418 bzw. 518 nicht vollständig im geräteseitigen Gehäuseteil 412c bzw. 512c angeordnet ist, sondern mit einem geräteseitigen Barriereanordnungsteil 428a bzw. 528a im geräteseitigen Gehäuseteil 412c bzw. 512c und mit einem fluidseitigen Barriereanordnungsteil 428b bzw. 528b im fluidseitigen Gehäuseteil 412d bzw. 512d angeordnet ist. Jeder Barriereanordnungsteil ist fest mit dem ihn tragenden Gehäuseteil verbunden. Dementsprechend weist der geräteseitige Barriereanordnungsteil 428a bzw. 528a einen geräteseitigen Saphirglasscheibenteil 430a bzw. 530a auf, welcher mittels eines geräteseitigen Kittabschnitts 432a bzw. 532a mit dem geräteseitigen Gehäuseteil 412c bzw. 512c verbunden ist. Ebenso weist der fluidseitige Barriereanordnungsteil 428b bzw. 528b einen fluidseitigen Saphirglasscheibenteil 430b bzw. 530b auf, welcher mittels eines fluidseitigen Kittabschnitts 432b bzw. 532b mit dem fluidseitigen Gehäuseteil 412d bzw. 512d verbunden ist.

Der wesentliche Unterschied der Ausführungsformen von Figur 12 zu den vorhergehenden Ausdrucksformen besteht jedoch darin, dass der jeweilige fluidseitige Gehäuseteil 412d bzw. 512d nicht stoffschlüssig mit der Wand 490a bzw. 590a des Gehäuses 94 bzw. 590 verbunden ist, sondern formschlüssig.

Die Wand 490a bzw. 590a ist als flexible Polymerwand ausgebildet. Der nach wie vor aus Metall oder aus einem steiferen Kunststoff als die Polymerwand gebildete fluidseitige Gehäuseteil 412d bzw. 512d weist an seiner Außenseite eine Ankerstruktur 493 bzw. 593 auf, welche in der flexiblen Polymerwand 490a bzw. 590a eingebettet ist. Die Ankerstruktur 493 kann beispielsweise als bezüglich der Gehäuseachse G nach radial außen auskragende geschlossen umlaufende Scheibe 494 ausgebildet sein. Die Ankerstruktur 593 kann eine Mehrzahl von in Umfangsrichtung um die Gehäuseachse A mit Abstand voneinander angeordnete, strahlenförmig nach radial außen auskragende Stachel-Vorsprüngen 594 umfassen oder durch die Stachel-Vorsprünge 594 gebildet sein. Die Zuordnung ist dabei lediglich beispielhaft. Alternativ kann die Ankerstruktur 493 die strahlenförmig auskragenden Stachel-Vorsprünge 594 aufweisen und die Ankerstruktur 593 die geschlossen umlaufende Scheibe 494.

Mit der in Figur 12 dargestellten formschlüssigen Verbindung von fluidseitigem Gehäuseteil 412d bzw. 512d und Gehäusewand 490a bzw. 590a können auch völlig Bauteile aus völlig unterschiedlichen Materialien sicher und dicht miteinander verbunden werden.

## Patentansprüche

1. Spektroskopische Sensoranordnung (10) zur Erfassung wenigstens eines vorbestimmten Analyten-Bestandteils eines Messfluids, wobei die Sensoranordnung (10) umfasst:
- ein Sensorgehäuse (12) mit einem Geräteabschnitt (18) und einem Probenabschnitt (16),
- eine im Geräteabschnitt (18) angeordnete Strahlungsquelle (64), welche ausgebildet ist, eine mit dem wenigstens einen vorbestimmten Analyten-Bestandteil wechselwirkende elektromagnetische Messstrahlung in Richtung zum Probenabschnitt (16) auszusenden,
- eine im Geräteabschnitt (18) angeordnete Detektorvorrichtung (66), welche dazu ausgebildet ist, in Richtung vom Probenabschnitt (16) einstrahlende elektromagnetische Strahlung zu erfassen,
- eine für die Messstrahlung durchlässige und für den wenigstens einen vorbestimmten Analyten-Bestandteil undurchlässige Barriereanordnung (28), wobei die Barriereanordnung (28) zwischen dem Geräteabschnitt (18) und dem Probenabschnitt (16) angeordnet ist,
- eine im Probenabschnitt (16) angeordnete Polymermatrix (40), welche dazu ausgebildet ist, den wenigstens einen Analyten-Bestandteil aufzunehmen und wieder abzugeben,
- eine im Probenabschnitt (16) angeordnete Reflektoranordnung (36; 136) mit einer zur Polymermatrix (40) und zur Barriereanordnung (28) hin weisenden Signalseite (36b; 136b) und mit einer der Signalseite (36b; 136b) entgegengesetzten Fluidseite (36a; 136a),
wobei die Reflektoranordnung (36; 136) wenigstens einen sie durchsetzenden Durchgang (54; 154) aufweist, durch welchen hindurch im bestimmungsgemäßen Messbetrieb der Sensoranordnung (10) ein Austausch des wenigstens einen Analyten-Bestandteils zwischen einer im bestimmungsgemäßen Messbetrieb das Messfluid enthaltenden äußeren Messumgebung (M) auf der Fluidseite (36a; 136a) der Reflektoranordnung (36; 136) und der auf der Signalseite (36b; 136b) der Reflektoranordnung (10) gelegenen Polymermatrix (40) erfolgt, wobei die Reflektoranordnung (10) dazu ausgebildet und angeordnet ist, vom Geräteabschnitt (18) her durch die Polymermatrix (40) auf ihre Signalseite (36b; 136b) einstrahlende Messstrahlung zurück in Richtung zum Geräteabschnitt (18) hin zu reflektieren,
**dadurch gekennzeichnet, dass** die Sensoranordnung (10) ein von der Polymermatrix (40) verschiedenes Abstandssicherungsmittel (48) aufweist, welches dazu ausgebildet ist, eine Annäherung der Reflektoranordnung (36; 136) an die Barriereanordnung (28) zu verhindern.

2. Sensoranordnung (10) nach Anspruch 1,
**dadurch gekennzeichnet, dass** das Abstandssicherungsmittel (48) einen Anlageabschnitt (44; 144) an der Reflektoranordnung (36; 136) aufweist, welcher sich mit einem starr mit dem Sensorgehäuse (12) verbundenen Gegenanlageabschnitt (46) in einem eine Annäherung des Anlageabschnitts (44; 144) an die Barriereanordnung (28) verhindernden Anlageeingriff befindet.

3. Sensoranordnung (10) nach Anspruch 2,
**dadurch gekennzeichnet, dass** die Reflektoranordnung (36; 136) wenigstens teilweise eine scheibenförmige Gestalt aufweist, wobei der Anlageabschnitt (44; 144) in einem Randbereich (36c; 136c) der scheibenförmigen Reflektoranordnung (36; 136) ausgebildet ist.

4. Sensoranordnung (10) nach Anspruch 3,
**dadurch gekennzeichnet, dass** wenigstens ein Teil des Randbereichs (36c; 136c) der Reflektoranordnung (36; 136) in einem Spaltraum (52) aufgenommen ist, welcher zur Barriereanordnung (28) hin von dem Gegenanlageabschnitt (46) und von der Barriereanordnung (28) weg von einem starr mit dem Sensorgehäuse (12) verbundenen Fixierbauteil (34) begrenzt ist.

5. Sensoranordnung (10) nach einem der vorhergehenden Ansprüche,
**dadurch gekennzeichnet, dass** das Abstandssicherungsmittel (48) einen Abstützabschnitt an der Reflektoranordnung (36; 136) aufweist, welcher sich körperlich an der Barriereanordnung (28) abstützt.

6. Sensoranordnung (10) nach einem der vorhergehenden Ansprüche,
**dadurch gekennzeichnet, dass** das Abstandssicherungsmittel (48) einen kraft- oder/und stoffschlüssigen Eingriff eines Halteabschnitts (44; 144) der Reflektoranordnung (36; 136) mit einem Gegenhalteabschnitt (46) des Sensorgehäuses (12) aufweist.

7. Sensoranordnung (10) nach einem der vorhergehenden Ansprüche,
**dadurch gekennzeichnet, dass** sich Polymermaterial von der Barriereanordnung (28) durchgehend bis zur Reflektoranordnung (36; 136) erstreckt.

8. Sensoranordnung (10) nach Anspruch 7,
**dadurch gekennzeichnet, dass** Polymermaterial einen Hohlraum (50) vollständig ausfüllt, welcher von der Barriereanordnung (28), von der Reflektoranordnung (36; 136) und von einem zwischen der Barriereanordnung (28) und der Reflektoranordnung (36; 136) gelegenen Abschnitt (16) des Sensorgehäuses (12) oder eines am Sensorgehäuse (12) aufgenommenen Bauteils (34) begrenzt ist.

9. Sensoranordnung (10) nach einem der vorhergehenden Ansprüche,
**dadurch gekennzeichnet, dass** sich sowohl auf der Signalseite (36b; 136b) als auch auf der Fluidseite (36a; 136a) Polymermaterial befindet, wobei die auf der Signalseite (36b; 136b) angeordnete Polymermatrix (40) eine größere Fläche der Reflektoranordnung (36; 136) bedeckt oder/und eine größere Dicke aufweist oder/und eine höhere Wärmebeständigkeit aufweist als eine auf der Fluidseite (36a; 136a) aufgetragene Schicht (38) aus Polymermaterial.

10. Sensoranordnung (10) nach einem der vorhergehenden Ansprüche,
**dadurch gekennzeichnet, dass** die Reflektoranordnung (36; 136) eine Mehrzahl von die Reflektoranordnung (36; 136) durchsetzenden Durchgängen (54; 154) aufweist, wobei die Durchgänge (54; 154), über die für den wenigstens einen Analyten-Bestandteil zugängliche Fläche der Fluidseite (36a; 136a) oder/und über den von für Messstrahlung nicht abgeschatteten Bereich (36f) der Signalseite (36b; 136b) der Reflektoranordnung (36; 136) betrachtet, heterogen verteilt ausgebildet oder/und angeordnet sind.

11. Sensoranordnung (10) nach Anspruch 10,
**dadurch gekennzeichnet, dass** die Reflektoranordnung (36; 136) Durchgänge (54; 154) mit unterschiedlichen Durchgangsquerschnittsflächen oder/und mit unterschiedlichen Durchgangsquerschnittsgestalten aufweist, oder/und dass die für den wenigstens einen Analyten-Bestandteil zugängliche Fläche der Fluidseite (36a; 136a) oder/und der für die Messstrahlung nicht abgeschattete Bereich (36f) der Signalseite (36b; 136b) Flächenbereiche (56, 60; 156, 160) unterschiedlicher Durchgangsdichte aufweist.

12. Sensoranordnung (10) nach Anspruch 11,
**dadurch gekennzeichnet, dass** die Reflektoranordnung (36; 136) in einem kreisförmigen Bereich (56; 156), welcher als Mittelpunkt einen Auftreffort (H) enthält, an dem eine von der Strahlungsquelle (64) ausgehende optische Achse (OA) auf die Signalseite (36b; 136b) auftrifft, und dessen Flächeninhalt wenigstens 10 %, vorzugsweise wenigstens 20 %, der Fläche des für Messstrahlung nicht abgeschatteten Bereichs (36f) der Signalseite (36b; 136b) beträgt, einen um wenigstens 20 Prozent geringeren Flächenanteil von Durchgangsquerschnittsflächen an der Fläche des kreisförmigen Bereichs (56; 156) aufweist als in einem flächengleichen, den kreisförmigen Bereich (56; 156) umgebenden ringförmigen Bereich (60; 160).

13. Sensoranordnung (10) nach Anspruch 11 oder 12,
**dadurch gekennzeichnet, dass** der vom Sensorgehäuse (10) nicht abgeschattete Bereich (36f) der Signalseite (36b; 136b) in einem kreisförmigen Bereich (56; 156), welcher als Mittelpunkt die Flächenmitte des für Messstrahlung nicht abgeschatteten Bereichs (36f) der Signalseite (36b; 136b) hat und dessen Flächeninhalt wenigstens 10%, vorzugsweise wenigstens 20 %, der Fläche des für Messstrahlung nicht abgeschatteten Bereichs (36f) der Signalseite (36b; 136b) beträgt, einen um wenigstens 20 % geringeren Flächenanteil von Durchgangsquerschnittsflächen an der Fläche des kreisförmigen Bereichs (56; 156) aufweist als in einem flächengleichen, den kreisförmigen Bereich (56; 156) umgebenden ringförmigen Bereich (60; 160).

14. Sensoranordnung (10) nach einem der Ansprüche 11 bis 13,
**dadurch gekennzeichnet, dass** in dem für Messstrahlung nicht abgeschatteten Bereich (36f) der Signalseite (36b; 136b) ein kreisförmiger Bereich (61; 156) existiert, dessen Flächeninhalt wenigstens dem 1,3-Fachen der durchschnittlichen Querschnittsfläche der Durchgänge (54; 154) in der zugänglichen Fläche (36d) entspricht und welcher frei ist von einer Durchgangsquerschnittsfläche.

15. Sensoranordnung (10) nach einem der vorhergehenden Ansprüche,
**dadurch gekennzeichnet, dass** die Detektorvorrichtung (66) eine für Messstrahlung empfindliche Detektorfläche (66a) aufweist, wobei eine Strahlungsaustrittsfläche (64a) der Strahlungsquelle (64) sich näher bei der Barriereanordnung (28) befindet als die Detektorfläche (66a) oder/und wobei die optische Achse (OA) der Strahlungsquelle (64) bezüglich einer Gehäuseachse (G), längs welcher sich das Sensorgehäuse (12) erstreckt, stärker geneigt ist eine Normale (66n) auf die Detektorfläche (66b).

16. Sensoranordnung (10) nach einem der vorhergehenden Ansprüche,
**dadurch gekennzeichnet, dass** die Strahlungsquelle (64) und die Detektorvorrichtung (66) in einer gemeinsamen Halterung (62) im Geräteabschnitt (18) aufgenommen sind.

17. Sensoranordnung (10) nach Anspruch 16,
**dadurch gekennzeichnet, dass** zwischen der Detektorvorrichtung (66) und der Halterung (62) eine thermisch isolierende Schicht (68) angeordnet ist.

18. Sensoranordnung (10) nach Anspruch 16 oder 17,
**dadurch gekennzeichnet, dass** die Halterung (62) einen Strahlungsbaugruppe-Temperatursensor (86) zur Erfassung einer Temperatur im Bereich einer die Strahlungsquelle (64) und die Detektorvorrichtung (66) aufweisenden Strahlungsbaugruppe trägt.

19. Sensoranordnung (10) nach einem der vorhergehenden Ansprüche,
**dadurch gekennzeichnet, dass** die Barriereanordnung (28) geteilt ist in einen geräteseitigen Barriereanordnungsteil und in einen fluidseitigen Barriereanordnungsteil und dass das Sensorgehäuse (12) unterteilt ist in einen den geräteseitigen Barriereanordnungsteil tragenden geräteseitigen Gehäuseteil (12c) und in einen den fluidseitigen Barriereanordnungsteil tragenden fluidseitigen Gehäuseteil (12d), wobei der fluidseitige Barriereanordnungsteil gemeinsam mit der Polymermatrix (40) und der Reflektoranordnung (36; 136) am fluidseitigen Gehäuseteil (12d) aufgenommen und bestimmungsgemäß lösbar mit dem geräteseitigen Gehäuseteil (12c) gekoppelt sind.

20. Sensoranordnung (10) nach einem der vorhergehenden Ansprüche,
**dadurch gekennzeichnet, dass** im Geräteabschnitt (18) des Sensorgehäuses (12) eine Steuerungs- oder/und Signalverarbeitungselektronik (78) angeordnet ist zur Steuerung der Strahlungsquelle (64) oder/und der Detektorvorrichtung (66) oder/und zur Auswertung von Erfassungssignalen der Detektorvorrichtung (66).

21. Sensoranordnung (10) nach Anspruch 20,
**dadurch gekennzeichnet, dass** im Geräteabschnitt (18) ein Elektronik-Temperatursensor (88) zur Erfassung einer Temperatur im Bereich der Steuerungs- oder/und Signalverarbeitungselektronik (78) aufgenommen ist.

22. Sensoranordnung (10) nach Anspruch 20 oder 21,
**dadurch gekennzeichnet, dass** die Wandstärke des Sensorgehäuses (12) im Bereich der aufgenommenen Steuerungs- oder/und Signalverarbeitungselektronik (78) größer ist als im Bereich der aufgenommenen Strahlungsquelle (64) und der aufgenommenen Detektorvorrichtung (66).

23. Sensoranordnung (10) nach einem der vorhergehenden Ansprüche,
**dadurch gekennzeichnet, dass** die Barriereanordnung (28) eine Saphirglasscheibe (30) aufweist, welche bevorzugt stoffschlüssig mit dem Sensorgehäuse (12) verbunden ist, besonders bevorzugt durch eine Schmelzverbindung.

## Claims

1. Spectroscopic sensor assembly (10) for detecting at least one predetermined analyte constituent of a measurement fluid, where the sensor assembly (10) comprises:
- A sensor housing (12) with an instrument section (18) and a specimen section (16),
- A radiation source (64) which is arranged in the instrument section (18) and is configured to emit in the direction towards the specimen section (16) electromagnetic measurement radiation which interacts with the at least one predetermined analyte constituent,
- A detector device (66) which is arranged in the instrument section (18) and is configured to detect electromagnetic radiation radiating in the direction from the specimen section (16),
- A barrier arrangement (28) which is transparent to the measurement radiation and impermeable to the at least one predetermined analyte constituent, where the barrier arrangement (28) is arranged between the instrument section (18) and the specimen section (16),
- A polymer matrix (40) which is arranged in the specimen section (16) and is configured to take up and to release again the at least one analyte constituent,
- A reflector assembly (36; 136) which is arranged in the specimen section (16) with a signal side (36b; 136b) facing towards the polymer matrix (40) and towards the barrier arrangement (28) and with a fluid side (36a; 136a) opposite to the signal side (36b; 136b),
Where the reflector assembly (36; 136) exhibits at least one passage (54; 154) penetrating through it through which during normal measurement operation of the sensor assembly (10) there takes place an exchange of the at least one analyte constituent between an external measurement environment (M) on the fluid side (36a; 136a) of the reflector assembly (36; 136) which during normal measurement operation contains the measurement fluid and the polymer matrix (40) situated on the signal side (36b; 136b) of the reflector assembly (10), where the reflector assembly (10) is configured and is arranged to reflect measurement radiation radiating onto its signal side (36b; 136b) from the instrument section (18) through the polymer matrix (40) back in the direction towards the instrument section (18),
**Characterized in that** the sensor assembly (10) exhibits a spacing-securing means (48) different from the polymer matrix (40) which is configured to prevent an approach of the reflector assembly (36; 136) to the barrier arrangement (28).

2. Sensor assembly (10) according to Claim 1,
**Characterized in that** the spacing-securing means (48) exhibits an abutting section (44; 144) at the reflector assembly (36; 136) which is in abutting engagement which prevents an approach of the abutting section (44; 144) to the barrier arrangement (28) with a counter-abutting section (46) connected rigidly with the sensor housing (12).

3. Sensor assembly (10) according to Claim 2,
**Characterized in that** the reflector assembly (36; 136) exhibits at least in part a disc-like shape, where the abutting section (44; 144) is configured in an edge region (36c; 136c) of the disc-like reflector assembly (36; 136).

4. Sensor assembly (10) according to Claim 3,
**Characterized in that** at least part of the edge region (36c; 136c) of the reflector assembly (36; 136) is accommodated in a gap space (52) which towards the barrier arrangement (28) is bounded by the counter-abutting section (46) and away from the barrier arrangement (28) by a fixing component (34) connected rigidly with the sensor housing (12).

5. Sensor assembly (10) according to one of the preceding Claims,
**Characterized in that** the spacing-securing means (48) exhibits a supporting section at the reflector assembly (36; 136) which is supported physically at the barrier arrangement (28).

6. Sensor assembly (10) according to one of the preceding Claims,
**Characterized in that** the spacing-securing means (48) exhibits a force-fitted and/or firmly bonded engagement of a retaining section (44; 144) of the reflector assembly (36; 136) with a counter-retaining section (46) of the sensor housing (12).

7. Sensor assembly (10) according to one of the preceding Claims,
**Characterized in that** polymer material extends from the barrier arrangement (28) continuously up to the reflector assembly (36; 136).

8. Sensor assembly (10) according to Claim 7,
**Characterized in that** the polymer material fills completely a hollow space (50) which is bounded by the barrier arrangement (28), by the reflector assembly (36; 136), and by a section (16) of the sensor housing (12) or of a component (34) accommodated at the sensor housing (12) situated between the barrier arrangement (28) and the reflector assembly (36; 136).

9. Sensor assembly (10) according to one of the preceding Claims,
**Characterized in that** both on the signal side (36b; 136b) and on the fluid side (36a; 136a) there is situated polymer material, where the polymer matrix (40) arranged on the signal side (36b; 136b) covers a larger area of the reflector assembly (36; 136) and/or exhibits greater thickness and/or exhibits higher thermal resistance than a layer (38) of polymer material applied onto the fluid side (36a; 136a).

10. Sensor assembly (10) according to one of the preceding Claims,
**Characterized in that** the reflector assembly (36; 136) exhibits a plurality of passages (54; 154) penetrating through the reflector assembly (36; 136), where the passages (54; 154), considered over the area of the fluid side (36a; 136a) accessible to the at least one analyte constituent and/or over the region (36f) of the signal side (36b; 136b) of the reflector assembly (36; 136) not obscured to measurement radiation, are configured and/or arranged with a homogeneous distribution.

11. Sensor assembly (10) according to Claim 10,
**Characterized in that** the reflector assembly (36; 136) exhibits passages (54; 154) with different passage cross-sectional areas and/or with different passage cross-sectional shapes, and/or that the area of the fluid side (36a; 136a) accessible to the at least one analyte constituent and/or the region (36f) of the signal side (36b; 136b) not obscured to the measurement radiation exhibits surface regions (56, 60; 156, 160) with differing passage densities.

12. Sensor assembly (10) according to Claim 11,
**Characterized in that** the reflector assembly (36; 136) exhibits in a circular region (56; 156) which as a midpoint contains an impingement location (H) at which an optical axis (OA) outbound from the radiation source (64) impinges on the signal side (36b; 136b) and whose area content equals at least 10%, preferably at least 20%, of the area of the region (36f) of the signal side (36b; 136b) not obscured to measurement radiation, an area fraction of passage cross-sectional areas out of the area of the circular region (56; 156) which is smaller by at least 20 percent than in an annular region (60; 160) with the same area surrounding the circular region (56; 156).

13. Sensor assembly (10) according to Claim 11 or 12,
**Characterized in that** the region (36f) of the signal side (36b; 136b) not obscured by the sensor housing (10) exhibits in a circular region (56; 156), which as midpoint has the area center of the region (36f) of the signal side (36b; 136b) not obscured to measurement radiation and whose area content equals at least 10%, preferably at least 20%, of the area of the region (36f) of the signal side (36b; 136b) not obscured to measurement radiation, an area fraction of passage cross-sectional areas out of the area of the circular region (56; 156) which is smaller by at least 20% than in an annular region (60; 160) with the same area surrounding the circular region (56; 156).

14. Sensor assembly (10) according to one of the Claims 11 to 13,
**Characterized in that** in the region (36f) of the signal side (36b; 136b) not obscured to measurement radiation there exists a circular region (61; 156) whose area content equals at least 1.3 times the mean cross-sectional area of the passages (54; 154) in the accessible area (36d) and which is free from a passage cross-sectional area.

15. Sensor assembly (10) according to one of the preceding Claims,
**Characterized in that** the detector device (66) exhibits a detector surface (66a) sensitive to measurement radiation, where a radiation exit surface (64a) of the radiation source (64) is situated nearer to the barrier arrangement (28) than the detector surface (66a) and/or where the optical axis (OA) of the radiation source (64) is tilted with respect to a housing axis (G) along which the sensor housing (12) extends more than a normal (66n) to the detector surface (66b).

16. Sensor assembly (10) according to one of the preceding Claims,
**Characterized in that** the radiation source (64) and the detector device (66) are accommodated in a common holder (62) in the instrument section (18).

17. Sensor assembly (10) according to Claim 16,
**Characterized in that** between the detector device (66) and the holder (62) there is arranged a thermally insulating layer (68).

18. Sensor assembly (10) according to Claim 16 or 17,
**Characterized in that** the holder (62) carries a radiation module temperature sensor (86) for detecting a temperature in the region of a radiation module exhibiting the radiation source (64) and the detector device (66).

19. Sensor assembly (10) according to one of the preceding Claims,
**Characterized in that** the barrier arrangement (28) is divided into an instrument-side barrier arrangement part and a fluid-side barrier arrangement part and that the sensor housing (12) is subdivided into an instrument-side housing part (12c) carrying the instrument-side barrier arrangement part and a fluid-side housing part (12d) carrying the fluid-side barrier arrangement part, where the fluid-side barrier arrangement part together with the polymer matrix (40) and the reflector assembly (36; 136) are accommodated at the fluid-side housing part (12d) and normally coupled detachably with the instrument-side housing part (12c).

20. Sensor assembly (10) according to one of the preceding Claims,
**Characterized in that** in the instrument section (18) of the sensor housing (12) there are arranged control and/or signal processing electronics (78) for controlling the radiation source (64) and/or the detector device (66) and/or for evaluating detection signals of the detector device (66).

21. Sensor assembly (10) according to Claim 20,
**Characterized in that** in the instrument section (18) there is accommodated an electronic temperature sensor (88) for detecting a temperature in the region of the control and/or signal processing electronics (78).

22. Sensor assembly (10) according to Claim 20 or 21,
**Characterized in that** the wall thickness of the sensor housing (12) in the region of the accommodated control and/or signal processing electronics (78) is greater than in the region of the accommodated radiation source (64) and of the accommodated detector device (66).

23. Sensor assembly (10) according to one of the preceding Claims,
**Characterized in that** the barrier arrangement (28) exhibits a sapphire glass disc (30) which preferably is firmly bonded with the sensor housing (12), especially preferably through a fused joint.

## Revendications

1. Agencement de capteurs spectroscopiques (10) pour détecter au moins un composant d'analyte prédéterminé d'un fluide de mesure, l'agencement de capteurs (10) comprenant :
- un boîtier de capteur (12) avec une partie appareil (18) et une partie échantillon (16),
- une source de rayonnement (64) disposée dans la partie appareil (18), qui est conçue pour émettre un rayonnement de mesure électromagnétique interagissant avec le au moins un composant d'analyte prédéterminé en direction de la partie échantillon (16),
- un dispositif détecteur (66) disposé dans la partie appareil (18), qui est conçu pour détecter un rayonnement électromagnétique incident en provenance de la partie échantillon (16),
- un agencement de barrière (28) perméable au rayonnement de mesure et imperméable au au moins un composant d'analyte prédéterminé, l'agencement de barrière (28) étant disposé entre la partie appareil (18) et la partie échantillon (16),
- une matrice polymère (40) disposée dans la partie échantillon (16), qui est conçue pour absorber et restituer le au moins un composant d'analyte,
- un agencement de réflecteurs (36 ; 136) disposé dans la partie échantillon (16) avec un côté signal (36b ; 136b) tourné vers la matrice polymère (40) et vers l'agencement de barrière (28) et avec un côté fluide opposé au côté signal (36b ; 136b) (36a ; 136a) opposé au côté signal (36b ; 136b),
l'agencement de réflecteurs (36 ; 136) au moins un passage (54 ; 154) la traversant, à travers lequel, dans le fonctionnement de mesure conforme à la destination de l'agencement de capteurs (10), un échange du au moins un composant d'analyte entre un environnement de mesure extérieur (M) contenant le fluide de mesure dans le fonctionnement de mesure conforme à la destination, sur le côté fluide (36a ; 136a) de l'agencement de réflecteurs (36 ; 136) et la matrice polymère (40) située du côté signal (36b ; 136b) de l'agencement de réflecteurs (10), l'agencement de réflecteurs (10) étant conçu et agencé pour réfléchir du rayonnement de mesure rayonnant, depuis la partie appareil (18) à travers la matrice polymère (40) sur son côté signal (36b ; 136b) vers la partie appareil (18),
**caractérisé en ce que** l'agencement de capteurs (10) comporte un moyen de maintien à distance (48) différent de la matrice polymère (40), qui est conçu pour empêcher un rapprochement de l'agencement de réflecteurs (36 ; 136) vers l'agencement de barrière (28).

2. Agencement de capteurs (10) selon la revendication 1,
**caractérisé en ce que** le moyen de maintien à distance (48) présente une partie d'appui (44 ; 144) sur l'agencement de réflecteurs (36 ; 136) qui se trouve, avec une partie de contre-appui (46) reliée de manière rigide au boîtier de capteur (12), dans un engagement d'appui empêchant un rapprochement de la partie d'appui (44 ; 144) vers l'agencement de barrière (28).

3. Agencement de capteurs (10) selon la revendication 2,
**caractérisé en ce que** l'agencement de réflecteurs (36 ; 136) présente au moins en partie une forme de disque, la partie d'appui (44 ; 144) étant formée dans une zone de bord (36c ; 136c) de l'agencement de réflecteurs en forme de disque (36 ; 136).

4. Agencement de capteurs (10) selon la revendication 3,
**caractérisé en ce qu'**au moins une partie de la zone de bord (36c ; 136c) de l'agencement de réflecteurs (36 ; 136) est reçue dans un espace de fente (52) qui est délimité, en direction de l'agencement de barrière (28), par la partie de contre-appui (46) et, à l'opposé de l'agencement de barrière (28), par un élément de fixation (34) relié de manière rigide au boîtier de capteur (12).

5. Agencement de capteurs (10) selon l'une des revendications précédentes,
**caractérisé en ce que** le moyen de maintien à distance (48) présente une partie d'appui sur l'agencement de réflecteurs (36 ; 136), qui s'appuie physiquement sur l'agencement de barrière (28).

6. Agencement de capteurs (10) selon l'une des revendications précédentes,
**caractérisé en ce que** le moyen de maintien à distance (48) présente un engagement par force et/ou par adhérence d'une partie de retenue (44 ; 144) de l'agencement de réflecteurs (36 ; 136) avec une partie de contre-retenue (46) du boîtier de capteur (12).

7. Agencement de capteurs (10) selon l'une des revendications précédentes,
**caractérisé en ce que** le matériau polymère s'étend de manière continue depuis l'agencement de barrière (28) jusqu'à l'agencement de réflecteurs (36 ; 136).

8. Agencement de capteurs (10) selon la revendication 7,
**caractérisé en ce que** le matériau polymère remplit complètement une cavité (50) qui est délimitée par l'agencement de barrière (28), par l'agencement de réflecteurs (36 ; 136) et par une partie (16) du boîtier de capteur (12) située entre l'agencement de barrière (28) et l'agencement de réflecteurs (36 ; 136) (36 ; 136) du boîtier de capteur (12) ou d'un composant (34) reçu sur le boîtier de capteur (12).

9. Agencement de capteurs (10) selon l'une des revendications précédentes,
**caractérisé en ce que** du matériau polymère se trouve aussi bien du côté signal (36b ; 136b) que du côté fluide (36a ; 136a), la matrice polymère (40) disposée du côté signal (36b ; 136b) recouvre une plus grande surface de l'agencement de réflecteurs (36 ; 136) et/ou présente une plus grande épaisseur et/ou une résistance thermique plus élevée qu'une strate (38) de matériau polymère appliquée sur le côté fluide (36a ; 136a).

10. Agencement de capteurs (10) selon l'une des revendications précédentes,
**caractérisé en ce que** l'agencement de réflecteurs (36 ; 136) comporte une pluralité de passages (54 ; 154) traversant l'agencement de réflecteurs (36 ; 136), les passages (54 ; 154) étant répartis et/ou disposés de manière hétérogène vu sur la surface de la face fluide (36a ; 136a) accessible au au moins un composant d'analyte et/ou sur la zone (36f) de la face de signal non masquée pour le rayonnement de mesure (36b ; 136b) de l'agencement de réflecteurs (36 ; 136).

11. Agencement de capteurs (10) selon la revendication 10,
**caractérisé en ce que** l'agencement de réflecteurs (36 ; 136) présente des passages (54 ; 154) avec différentes sections transversales de passage et/ou avec différentes formes de section transversale de passage, et/ou que la surface accessible pour le au moins un composant d'analyte du côté fluide (36a ; 136a) et/ou la zone (36f) non masquée pour le rayonnement de mesure du côté signal (36b ; 136b) présente des zones de surface (56, 60 ; 156, 160) de densité de passage différente.

12. Agencement de capteurs (10) selon la revendication 11,
**caractérisé en ce que** l'agencement de réflecteurs (36 ; 136) dans une zone circulaire (56 ; 156) qui contient en tant que centre un point d'impact (H) auquel un axe optique (OA) partant de la source de rayonnement (64) frappe le côté signal (36b ; 136b) et dont la surface est d'au moins 10 %, de préférence d'au moins 20 %, de la surface de la zone (36f) non masquée pour le rayonnement de mesure du côté signal (36b ; 136b), présente une proportion de surface de sections transversales de passage sur la surface de la zone circulaire (56 ; 156) inférieure d'au moins 20 % à celle d'une zone annulaire (60 ; 160) de même surface entourant la zone circulaire (56 ; 156).

13. Agencement de capteurs (10) selon la revendication 11 ou 12,
**caractérisé en ce que** la zone (36f) du côté signal (36b ; 136b) non masquée par le boîtier de capteur (10) dans une zone circulaire (56 ; 156) qui a pour centre le centre de la surface de la zone (36f) du côté signal non masquée pour le rayonnement de mesure (36b ; 136b) et dont la surface est d'au moins 10 %, de préférence d'au moins 20 %, de la surface de la zone (36f) non masquée pour le rayonnement de mesure du côté signal (36b ; 136b) a une proportion de surface de sections transversales de passage inférieure d'au moins 20 % à la surface de la zone circulaire (56 ; 156) par rapport à une zone annulaire (60 ; 160) de même surface entourant la zone circulaire (56 ; 156).

14. Agencement de capteurs (10) selon l'une des revendications 11 à 13,
**caractérisé en ce que** dans la zone (36f) non masquée pour le rayonnement de mesure du côté signal (36b ; 136b), il existe une zone circulaire (61 ; 156) dont la surface correspond au moins à 1,3 fois la surface moyenne de la section transversale des passages (54 ; 154) dans la surface accessible (36d) et qui est exempte de surface de section transversale de passage.

15. Agencement de capteurs (10) selon l'une des revendications précédentes,
**caractérisé en ce que** le dispositif détecteur (66) présente une surface de détection (66a) sensible au rayonnement de mesure, une surface de sortie de rayonnement (64a) de la source de rayonnement (64) étant située plus près de l'agencement de barrière (28) que la surface de détection (66a) et/ou l'axe optique (OA) de la source de rayonnement (64) étant plus incliné par rapport à un axe de boîtier (G) le long duquel s'étend le boîtier de capteur (12) qu'une normale (66n) à la surface de détection (66b).

16. Agencement de capteurs (10) selon l'une des revendications précédentes,
**caractérisé en ce que** la source de rayonnement (64) et le dispositif détecteur (66) sont reçus dans un support commun (62) dans la partie appareil (18).

17. Agencement de capteurs (10) selon la revendication 16,
**caractérisé en ce qu'**une strate thermiquement isolante (68) est disposée entre le dispositif détecteur (66) et le support (62).

18. Agencement de capteurs (10) selon la revendication 16 ou 17,
**caractérisé en ce que** le support (62) porte un capteur de température (86) du module de rayonnement pour détecter une température dans la zone d'un module de rayonnement comportant la source de rayonnement (64) et le dispositif de détection (66).

19. Agencement de capteurs (10) selon l'une des revendications précédentes,
**caractérisé en ce que** l'agencement de barrière (28) est divisé en une partie d'agencement de barrière côté appareil et en une partie d'agencement de barrière côté fluide et **en ce que** le boîtier de capteur (12) est divisé en une partie de boîtier côté appareil portant la partie d'agencement de barrière côté appareil (12c) et une partie de boîtier côté fluide (12d) portant la partie d'agencement de barrière côté fluide, la partie d'agencement de barrière côté fluide étant reçue avec la matrice polymère (40) et l'agencement de réflecteurs (36 ; 136) sur la partie de boîtier côté fluide (12d) et étant couplés de manière amovible, conformément à leur destination, à la partie de boîtier côté appareil (12c).

20. Agencement de capteurs (10) selon l'une des revendications précédentes,
**caractérisé en ce que** dans la partie appareil (18) du boîtier de capteur (12) est disposée une électronique de commande et/ou de traitement de signaux (78) pour commander la source de rayonnement (64) et/ou le dispositif détecteur (66) et/ou pour évaluer les signaux de détection du dispositif détecteur (66).

21. Agencement de capteurs (10) selon la revendication 20,
**caractérisé en ce que** dans la partie appareil (18) est reçu un capteur de température électronique (88) pour détecter une température dans la zone du circuit électronique de commande et/ou de traitement de signaux (78).

22. Agencement de capteurs (10) selon la revendication 20 ou 21,
**caractérisé en ce que** l'épaisseur de paroi du boîtier de capteur (12) dans la zone de l'électronique de commande et/ou de traitement de signaux (78) reçue est supérieure à celle dans la zone de la source de rayonnement (64) reçue et du dispositif détecteur (66) reçu.

23. Agencement de capteurs (10) selon l'une des revendications précédentes,
**caractérisé en ce que** l'agencement de barrière (28) comporte une vitre en verre saphir (30) qui est de préférence connectée par adhérence de matière au boîtier de capteur (12), de préférence par une liaison par fusion.
